# EUROPÄISCHE PATENTSCHRIFT

(11) **EP 2 409 074 B1**
(45) Veröffentlichungstag und Bekanntmachung des Hinweises auf die Patenterteilung: **20.12.2017**
(21) Anmeldenummer: 10708562.3
(22) Anmeldetag: 16.03.2010
(51) Int. Cl.: F21S 11/00, G02B 6/00, G02B 6/28

(54) **OPTISCHER SAMMLER UND EINRICHTUNG MIT OPTISCHEM SAMMLER**
OPTICAL COLLECTOR AND DEVICE HAVING OPTICAL COLLECTOR
COLLECTEUR OPTIQUE ET ÉQUIPEMENT AVEC COLLECTEUR OPTIQUE

(30) Priorität: 18.03.2009 DE 102009013821
(43) Veröffentlichungstag der Anmeldung: 25.01.2012
(73) Patentinhaber: GAPI Technische Produkte GmbH, 51503 Rösrath (DE)
(72) Erfinder: MELLER, Dieter, 53347 Alfter (DE)
(74) Vertreter: Lippert Stachow Patentanwälte Rechtsanwälte
(86) Internationale Anmeldenummer: PCT/EP2010/053346
(87) Internationale Veröffentlichungsnummer: WO 2010/106048

(56) Entgegenhaltungen:
- EP-A1- 0 534 853
- EP-A2- 0 115 843
- DE-B- 1 221 933
- JP-A- H01 253 105
- US-A- 4 379 613
- US-A- 4 483 311
- US-A- 4 697 867
- US-A- 5 357 592
- US-A- 5 751 870

## Beschreibung

Die Erfindung betrifft einen optischer Sammler mit einem optischen Eingang zum Einkoppeln von Licht aus mehreren Eingangslichtwellenleitern in den Sammler und einem optischen Ausgang zum Auskoppeln von Licht aus dem Sammler in einen Ausgangslichtwellenleiter. Die Erfindung betrifft ferner eine lichtoptische Einrichtung mit dem optischen Sammler.

Es ist bekannt, Lichtwellenleiter durch bestimmte Techniken zusammenzuführen. Dies ist jedoch zumeist auf sehr wenige zusammenzuführende Lichtwellenleiter beschränkt und technisch aufwendig. Zudem sind die Querschnitte der zusammengeführten Leiter beschränkt und in Bezug auf den Ausgangslichtwellenleiter engen Restriktionen unterlegen, da auch der Querschnitt des Ausgangslichtleiter nicht beliebig groß sein kann. Ferner soll die Zusammenführung der Lichtwellenleiter mit möglichst geringen Lichtverlusten im Verbindungsbereich erfolgen. Anderseits besteht der Bedarf, die Möglichkeiten der Verbindung mehrer Lichtwellenleiter zu erweitern, um so auch neue Anwendungsbereiche zu erschließen.

Der Erfindung liegt daher die Aufgabe zugrunde, einen Sammler der eingangs genannten Art bereitzustellen, der einerseits einfach aufgebaut und einfach herstellbar ist, andererseits möglichst flexibel einsetzbar ist und die oben genannten Probleme löst.

Die gestellte Aufgabe wird erfindungsgemäß durch einen Sammler nach Anspruch 1 gelöst. Vorteilhafte Weiterbildungen werden in den Unteransprüchen beschrieben.

Die gestellte Aufgabe wird insbesondere dadurch gelöst, dass der Sammler einen optischen Körper mit einem Basisbereich, in dem der optische Eingang mit mindestens zwei ersten Kopplungsstellen angeordnet ist, und einen Spitzenbereich, in dem der optische Ausgang mit einer zweiten Kopplungsstelle angeordnet ist, aufweist, dass die ersten Kopplungsstellen (im folgenden auch Einkopplungsstellen genannt) jeweils eine optische Eingangsquerschnittsfläche und die zweite Kopplungsstelle (Auskopplungsstelle) eine Ausgangsquerschnittsfläche aufweisen und dass die Ausgangsquerschnittsfläche kleiner als die Summe aller Eingangsquerschnittsflächen ist.

Es kann somit Licht in den breiteren Basisbereich des optischen Körpers eingekoppelt werden, welches in dem Spitzenbereich und/oder auf seinem Weg vom Basisbereich zum Spitzenbereich vorzugsweise stetig gebündelt und im Spitzenbereich ausgekoppelt wird. Hierbei kann das Licht im Spitzenbereich gebündelt und ausgekoppelt werden, wobei die Bündelung und die Auskoppelung zumindest im Wesentlichen gleichzeitig oder räumlich voneinander getrennt erfolgen können. Die Bündelung kann sich darauf beziehen, dass der Gesamtquerschnitt der lichtleitenden Bereiche des Sammlers sich in Hauptfortpflanzungsrichtung des Lichtes verjüngt, wobei gegebenenfalls die Energiedichte (Lichtdichte) in den lichtleitenden Bereichen des Sammlers zumindest im Wesentlichen konstant bleiben kann und die lichtleitenden Bereiche geometrisch zusammengeführt werden, und/oder darauf, dass die Energiedichte des weitergeleiteten Lichtes durch die Bündelung erhöht wird. Im ersteren Fall kann eine Erhöhung der Energiedichte durch die Bündelung auch zumindest im Wesentlichen erst bei der Einkoppelung des Lichtes in den Ausgangslichtwellenleiter erfolgen. Vorzugsweise erfolgt die Lichtbündelung kontinuierlich über die Fortpflanzung des Lichtes in dem sich verjüngenden optischen Körper. In dem Bereich maximaler Bündelung kann die Auskoppelung erfolgen.

Der optische Körper sei hierbei allgemein der Körper, der in Bezug auf das eingekoppelte Licht lichtwellenleitend ist. Der optische Körper kann einen weiteren Körper oder Bereiche umfassen, die zumindest im Wesentlichen nicht lichtwellenleitend sind oder in die Licht von den Einkoppelungsstellen direkt oder indirekt praktisch nicht einkoppelt. Die lichtleitenden und nicht lichtleitenden Bereiche können z.B. unterschiedliche optische Eigenschaften aufweisen wie z.B. Brechungsindizes, Transmissionskoeffizienten usw. oder durch derartige Bereiche voneinander getrennt sein. Vorzugsweise besteht der optische Körper praktisch vollständig aus lichtwellenleitenden Bereichen, in die Licht einkoppelt.

Der sich vom Basisbereich zum Spitzenbereich verjüngende optische Körper kann zum Beispiel trichterartig, insbesondere kegelartig, pyramidenartig, keilförmig oder auf andere geeignete Weise ausgebildet sein. Die Verjüngung kann in der Hauptfortpflanzungsrichtung des Lichtes kontinuierlich erfolgen, insbesondere stetig bzw. gleichmäßig. Dies gilt vorzugsweise für alle Lichtleitungspfade des Körpers oder für alle Lichtleitungspfade einer Gruppe von Lichtleitungspfaden jeweils in gleicher Weise. Die Gruppen von Lichtleitungspfaden können sich durch die Geometrie des Lichtleitungsweges innerhalb des optischen Körpers unterscheiden, beispielsweise durch den Winkel zur Längsachse des optischen Körpers, z.B. wenn der Körper eine pyramidale Form aufweist und Licht durch die ersten Koppelungsstellen in die Eckbereiche oder Kantenmitten der Pyramide eingekoppelt wird.

Das eingekoppelte Licht kann somit in Richtung der trichterartigen Verjüngung in dem optischen Körper geführt und gebündelt werden. Die Einkopplungsrichtung in den optischen Körper und die Auskopplungsrichtung in den Endabschnitt des Ausgangslichtwellenleiters können hierbei zumindest im Wesentlichen gleich sein, wodurch eine hohe Effizienz des Sammlers erzielt werden kann. Allgemein kann die Hauptfortpflanzungsrichtung des Lichtes im Sammler in Bezug auf das Licht, welches durch zumindest eine oder sämtliche Einkoppelungsstellen eingekoppelt wird, zumindest im Wesentlichen linear sein.

Gegebenenfalls kann nach einer Abwandlung auch der optische Ausgang in dem Spitzenbereich eine optische Umlenkeinrichtung umfassen, die das eingekoppelte Licht bündelt und fokussiert und der Auskoppelungsstelle des Sammlers zuleitet, durch welche das Licht in den Endabschnitt des Ausgangslichtwellenleiters eingekoppelt wird. Das Licht kann somit durch die ersten Kopplungsstellen in Einkopplungsrichtung zum Spitzenbereich hin in den Sammler eingespeist, im Spitzenbereich mittels Reflektoren wie Parabolspiegeln oder anderen Umlenkeinrichtungen zum Ausgang im Basisbereich hin reflektiert und vorzugsweise in den Basisbereich hinein fokussiert werden, so dass das gesammelte Licht an der Basisseite des Sammlers auskoppeln kann. Der optische Ausgang kann in einer geometrischen Mitte des Basisbereiches vorgesehen sein. Die Umlenkeinrichtung kann das durch einen, mehrere oder vorzugsweise sämtliche Einkoppelungsstellen eingekoppelte Licht zur Auskoppelungsstelle umlenken. Hierdurch kann der Sammler an unterschiedliche räumliche Verhältnisse angepasst werden.

Zur Führung des Lichtes in dem optischen Körper kann derselbe von zwei zumindest etwa parallel zueinander angeordneten Lichtleitseitenflächen begrenzt werden, die von dem Basisbereich zu dem Spitzenbereich hin verlaufen, oder deren Abstand zueinander sich vom Basisbereich zum Spitzenbereich hin vergrößert. Das Licht wird durch den Eingangslichtwellenleiter dann zwischen die beiden Lichtleitseitenflächen eingestrahlt und zum Spitzenbereich hin geführt. Hierdurch wird eine Lichtausbreitung durch Mehrfachreflexionen innerhalb des Sammlers zurück zur Einkopplungsstelle vermieden, wie sie bei sich signifikant verjüngendem Lichtleitungspfad auftreten. Die Lichtleitseitenflächen können in einem sich zum Spitzenbereich hin aufweitenden Winkel von ≤ 20-30° oder ≤ 10-15° oder ≤ 5° zueinander schräg angestellt sein. Vorzugsweise sind die Lichtleitflächen zumindest etwa parallel zur Einkopplungsrichtung der diesen jeweils zugeordneten ersten Kopplungsstellen angeordnet. Gegebenenfalls kann der Abstand der Lichtleitseitenflächen zum Spitzenbereich hin sich auch verringern, wozu die Seitenflächen einen Winkel von ≤ 20-30° oder ≤ 10-15° oder ≤ 5° zueinander einschließen können, auch wenn dies nicht bevorzugt ist. Die Lichtleitseitenflächen können in Verlängerung der Eingangslichtleiter angeordnet sein.

Die Lichtleitflächen sind zweckmäßig so ausgebildet sein, dass an ihnen eine möglichst verlustfreie Totalreflexion des eingespeisten Lichtes erfolgen kann. Vorzugsweise sind zumindest die ersten Kopplungsstellen zwischen den Lichtleitseitenflächen angeordnet, so dass diese zwischen die Lichtleitseitenflächen Licht einkoppeln. Die Lichtleitflächen können jeweils die Begrenzungsflächen des optischen Körpers aus lichtleitendem Material darstellen. Gegebenenfalls können die Lichtleitflächen allgemein auch von nicht lichtleitenden Bereichen oder Körpern umgegeben sein, so dass diese nicht oder nicht vollständig die körperlichen Begrenzungsflächen des Sammlers darstellen, beispielsweise auch, um den Sammler mechanisch zu stabilisieren oder vor äußeren Eingriffen zu schützen.

Die von den Lichtleitseiten begrenzten Schmalseiten des optischen Körpers können eine Lichtauskoppelung minimierend ausgestaltet sein, beispielsweise verspiegelt oder anders geeignet beschichtet oder nach Außen hin eng zusammenlaufend, so dass das Licht unter mehrfacher Totalreflektion in den Korpus zurück reflektiert wird.

Die Lichtleitseitenflächen können eine Wandung aus lichtleitendem Material mit einer Wandstärke begrenzen, welche über die Erstreckung des Sammlers von dem Basisbereich zum Spitzenbereich vorzugsweise zumindest im Wesentlichen konstant sein kann oder sich zum Spitzenbereich hin verbreitert. Vorzugsweise erstreckt sich der optische Eingangsquerschnitt der ersten Kopplungsstellen jeweils über zumindest fast die gesamte Wandstärke, wodurch ein großer Lichtstrom in die Wandung eingespeist werden kann. Die Bereiche zwischen benachbarten Einkoppelungsstellen können eine geeignete Querschnittsgeometrie oder Beschaffenheit aufweisen, beispielsweise auch geeignete Beschichtungen, um eine unerwünschte Lichtauskoppelung in diesen Bereichen zu vermeiden.

Vorzugsweise ist der optische Körper kegelförmig ausgebildet, insbesondere als Kreiskegel oder auch als Kegel mit geschlossen bogenförmiger, ovaler, mehreckiger oder anderer geeigneter Basisfläche, und weist eine äußere Kegelmantelfläche auf. Der optische Körper kann als Kegel oder Kegelstumpf ausgebildet sein, entsprechend bei pyramidaler Gestalt auch als Pyramidenstrumpf. Vorzugsweise ist der optische Körper als gerader Kegel ausgeführt, gegebenenfalls auch als schiefer Kegel.

Vorzugsweise weist der optische Körper allgemein eine innere und eine äußere Mantelfläche als Lichtleitflächen auf, zwischen die durch die ersten Koppelungsstellen Licht eingekoppelt wird, und die den lichtleitenden Bereich des optischen Körpers nach radial innen und radial außen begrenzen.

Besonders bevorzugt wird der optische Körper von zwei als Kegelmantelflächen ausgebildeten Lichtleitseitenflächen, der äußeren Kegelmantelfläche und einer ersten inneren Kegelmantelfläche, begrenzt, wobei die erste innere Kegelmantelfläche einen sich zum Spitzenbereich hin verjüngenden Hohlkegel oder Kegel aus zumindest im Wesentlichen nicht lichtdurchdrungenem Material ausbilden kann, der eine Tiefe zum Spitzenbereich hin von ≤ dem 1-2-fachen oder ≤ dem 3-4-fachen Durchmesser der Querschnitte der ersten Koppelstellen haben kann. Die inneren und äußeren Kegelmantelflächen sind vorzugsweise zumindest etwa koaxial bzw. konzentrisch zueinander angeordnet, so dass sich eine konstanter Abstand zwischen diesen und eine konstante Wandstärke ergibt, was allgemein für die inneren und äußeren Mantelflächen gelten kann. Die erste innere Kegelmantelfläche kann eine geometrische Begrenzungsfläche des optischen Körpers darstellen, so dass diese ihrerseits eine Ausnehmung begrenzt, die sich unter konischer Verjüngung von dem Basisbereich zu dem Spitzenbereich hin erstreckt. Vorzugsweise weisen diese beiden Kegelmantelflächen jeweils einen zumindest etwa gleichgroßen Spitzenwinkel auf. Somit können die erste äußere und die erste innere Kegelmantelfläche einen hohlkegelförmigen optischen Körper mit der Wandung begrenzen.

Die ersten Kopplungsstellen weisen jeweils eine Einkopplungsrichtung zur Einkopplung des Lichtes in den Sammler auf, die zumindest etwa parallel zur äußeren und/oder inneren (Kegel)mantelfläche verläuft. Die den ersten Kopplungsstellen zugeordneten Einkopplungsrichtungen weichen jeweils in ihrem Betrag um weniger als 30° von der ersten und/oder zweiten Lichtleitseitenfläche ab. Die Abweichung zu der inneren und /oder äußeren Lichtleitseitenfläche hin kann unabhängig voneinander in dem Bereich von ± 20-30° oder ± 15° oder vorzugsweise ± 5-10° abweichen. Dies kann jeweils im Rahmen der Erfindung unabhängig von der Ausbildung der inneren und/oder äußeren Lichtleitfläche als (Kegel)Mantelfläche gelten. Die Einkoppelungsrichtung im Sinne der Erfindung ist allgemein die Hauptfortpflanzungs- bzw. -ausbreitungsrichtung des in den Sammler eingekoppelten Lichtes. Der optische Körper kann gegebenenfalls auch als Kegelsegment ausgebildet sein.

Gegebenenfalls kann der optische Körper auch im Wesentlichen plattenförmig mit einem kreissegment- oder fächer- bzw. keilartigen Umriss ausgeführt sein, wobei die plattigen Seitenflächen als Lichtleitseitenflächen ausgebildet und vorzugsweise in etwa planparallel angeordnet sein können. Hierbei kann der Basisbereich von einem radial äußeren, vorzugsweise (kreis)bogenförmigen Umfangsbereich mit den ersten Kopplungsstellen und der Spitzenbereich von einem radial inneren, vorzugsweise (kreis)bogenförmigen Umfangsbereich mit der zweiten Kopplungsstelle gebildet werden. Zur verbesserten Lichtleitung können von dem äußeren Umfangsbereich radial nach innen verlaufende Ausnehmungen oder Schlitze vorgesehen sein. Diese können sich vorzugsweise keilförmig so verjüngen, dass jeweils von den ersten Kopplungsstellen ausgehend und über die radiale Erstreckung der Schlitz ein Lichtleitkanal mit zueinander parallelen Seitenwänden gebildet wird.

Zur möglichst verlustfreien Einkopplung ist die Eingangsquerschnittsfläche zumindest einer oder sämtlicher der ersten Kopplungsstellen, d.h. das "Eintrittsfenster" der Kopplungsstellen, zumindest im Wesentlichen senkrecht zu der jeweiligen Kopplungsstelle zugeordneten Lichteinkopplungsrichtung angeordnet. Vorzugsweise weisen die ersten Kopplungsstellen jeweils eine Längsmittelachse auf, die senkrecht und mittig zur der Eingangsquerschnittsfläche der jeweiligen Koppelungsstelle angeordnet ist.

Die zweite Kopplungsstelle kann eine Aufnahme für einen Endabschnitt des Ausgangslichtwellenleiters aufweisen. Der Endabschnitt kann in der Aufnahme festgelegt, beispielsweise eingeklebt oder auf andere Weise gehaltert werden, z.B. durch externe Haltemittel. Die Aufnahme kann einen Aufnahmeraum mit einer die Ausgangsquerschnittsebene bildenden Basisebene aufweisen. Bevorzugt verjüngt sich der Aufnahmeraum von der Basisebene in Richtung zum Basisbereich des Sammlers hin. In Anpassung an den Aufnahmeraum kann der Endabschnitt des Ausgangslichtleiters ebenfalls sich verjüngend ausgebildet sein.

Vorzugsweise ist der Ausgangslichtwellenleiter mit seinem Endabschnitt an die Form des Aufnahmeraumes angepasst. Vorzugsweise ist er passgenau und idealerweise vollflächig an die Aufnahme des optischen Körpers ankoppelbar bzw. an diese anlegbar oder mit dieser unmittelbar verbindbar, so dass Verluste beim Übergang des Lichtes von dem optischen Körper in den Ausgangslichtwellenleiter zumindest minimiert werden können. Die Begrenzungsfläche des Aufnahmeraumes und der Endabschnitt des Ausgangslichtwellenleiters sind vorzugsweise kongruent ausgebildet. Zwischen dem Endabschnitt des Ausgangslichtwellenleiters und der Aufnahme des Sammlers verbleibt vorzugsweise nur ein geringer oder praktisch kein Luftspalt, gegebenenfalls kann zwischen Endabschnitt und Aufnahme ein lichtdurchlässiges Material angeordnet sein, dessen Brechungsindex dem des optischen Körpers und des Ausgangslichtwellenleiters entspricht oder kleiner als diese sind, vorzugsweise ist ein derartiges Material (ausgenommen Luft) nicht vorhanden. Die umfängliche Begrenzungsfläche des Aufnahmeraumes zum Sammler hin kann kleiner als die Summe aller Eingangsquerschnittsflächen sein.

Besonders bevorzugt ist die zweite Kopplungsstelle derart ausgebildet oder mit Mitteln versehen, dass diese oder dass diese Mittel einen Eintritt von Rückstreulicht aus einem an die zweite Kopplungsstelle ankoppelnden Ausgangslichtwellenleiter zurück in den optischen Sammler im Vergleich zu einem optisch durchgehenden Lichtleitungspfad aus dem lichtwellenleitenden Material des optischen Körpers des Sammlers, der ansonsten den gleichen Querschnitt hat, verringern oder minimieren. Hierzu kann allgemein die Verbindung von Endabschnitt des Ausgangslichtleiters und der Begrenzungsfläche der Sammleraufnahme derart erfolgen, dass zwischen diesen eine optisch wirksame Verbindungsfläche erzeugt wird, die für zumindest im Wesentlichen senkrecht einfallendes Licht durchlässig ist, an welcher Licht, welches in einem Winkel kleiner dem Grenzwinkel der Totalreflexion einfällt, jedoch total reflektiert wird. Dies kann durch die oben beschriebene Verbindung der beiden Bauteile erzielt werden. Bereits in den Endabschnitt des Ausgangsleiters eingekoppeltes Licht, welches unter geeignetem Winkel auf die Verbindungsfläche fällt, wird somit wieder zurück in den Ausgangslichtwellenleiter eingekoppelt, z.B. unter Totalreflexion in den Endabschnitt und weiter in den Ausgangslichtleiter zurück reflektiert. Das Licht koppelt somit nicht wieder zurück in den Sammler aus und/oder ein Durchstrahlen des Endabschnittes von einer Seite der Auskoppelungsfläche bzw. des Aufnahmeraumes in die gegenüberliegende Seite derselben/desselben wird verhindert. Die Effizienz des Sammlers kann hierdurch deutlich erhöht werden. Gegebenenfalls kann dieser Effekt alternativ oder zusätzlich durch andere Maßnahmen wie eine geeignete, z. B. halbdurchlässige, Verspiegelung oder lichtdurchlässige Beschichtung des Endabschnittes des Ausgangslichtleiters und/oder der umfänglichen Begrenzungsfläche des Aufnahmeraumes des Sammlers (welche eine zweite innere (Kegel)mantelfläche darstellen kann) erzeugt oder verstärkt werden. Durch derartige Maßnahmen kann unter gewissen Umständen auch der Endabschnitt des Ausgangsleiters einstückig mit dem Sammler verbunden und beispielsweise als vorzugsweise axial nach außen weisender Fortsatz ausgebildet sein. Diese Verbindungsfläche oder "verspiegelte" Fläche kann die Auskoppelungsfläche des Sammlers bzw. des optischen Körpers darstellen.

Der Aufnahmeraum für den Endabschnitt kann (kreis)kegelförmig oder pyramidal bzw. polygonal ausgebildet sein, wobei die Ausgangsquerschnittsebene des Sammlers die Basisebene des Aufnahmeraumes bilden kann. Der Aufnahmeraum kann sich zum Basisbereich des Sammlers bzw. zu den ersten Kopplungsstellen hin verjüngen und ist vorzugsweise hinterschneidungsfrei. Der Aufnahmeraum kann eine oder mehrere seitliche Begrenzungsflächen aufweisen, deren Anzahl der Anzahl der ersten Kopplungsstellen entsprechen kann, vorzugsweise ist eine vollständig umlaufende Begrenzungsfläche gegeben, die vorzugsweise keine Kanten oder seitlichen Vorsprünge aufweist. Die Begrenzungsfläche(n) bzw. die Bereiche derselben stehen jeweils zumindest im Wesentlichen senkrecht zur Einkopplungsrichtung der zugeordneten ersten Kopplungsstelle bzw. Ausbreitungsrichtung des auf die Begrenzungsfläche fallenden Lichtes (die der Auskoppelungsrichtung aus dem optischen Körper entspricht), wobei der Aufnahmeraum geometrisch vollständig durch diese Begrenzungsfläche(n) oder eine Einhüllende derselben bestimmt sein kann. Die Seitenflächen des Aufnahmeraumes können somit polygonal sein oder Umgangsabschnitte eines Kegels (insbes. Kreiskegels) oder (Kreis)kegelstumpfes darstellen. Die Formgestalt der Aufnahme kann der Formgestalt des optischen Körpers entsprechen, unter Berücksichtigung der geometrischen Bedingung, dass das Licht durch den optischen Körper vorzugsweise senkrecht auf die Begrenzungsfläche der Aufnahme fällt.

Vorzugsweise ist der Endabschnitt des Ausgangslichtleiters formtreu zu dem Aufnahmeraum ausgebildet, beispielsweise in gleicher Weise wie der Aufnahmeraum pyramidal oder kegelförmig ausgebildet. Damit ist der Endabschnitt passgenau in dem Aufnahmeraum an dem optischen Körper ankoppelbar, wobei vorzugsweise Lichtauskoppelbereiche des Aufnahmeraumes und Lichteinkoppelabschnitte des korrespondierenden Endabschnittes kongruent, z.B. planparallel, ausgebildet sind.

Insgesamt können die Lichtleitseitenflächen des optischen Köpers derart von einer planparallelen oder konzentrischen bzw. koaxialen Anordnung abweichen und die Einfallsrichtung des Lichtes auf die Begrenzungsfläche der Ausnehmung derart von einem senkrechten Einfall abweichen, dass insgesamt die Lichtverluste des Sammlers hierdurch ≤ 15-20% oder ≤ 5-10%, vorzugsweise ≤ 1,5-3% sind. Die Lichtverluste bestimmen sich aus Differenz des Lichtstroms (lumen) des insgesamt in den Sammler durch die ersten Kopplungsstellen eingekoppelten Lichtes und dem Lichtstrom des aus dem Ausgangslichtleiter weitergeleiteten Lichtes.

Vorzugsweise ist der Aufnahmeraum kegelartig mit einer zweiten inneren Kegelmantelfläche ausgebildet oder weist eine Form, insbesondere Polyederform auf, die der Form der äußeren Mantelfläche des optischen Körpers entspricht.

Der Aufnahmeraum und die durch die erste innere Mantelfläche bzw. Kegelmantelfläche begrenzte Ausnehmung des optischen Körpers können mit ihrer jeweiligen Spitze zumindest nah benachbart zueinander angeordnet sein, aneinander stoßen oder sich um zumindest einen geringen Betrag durchdringen, wobei der Abstand der Spitzen vorzugsweise geringer als die 3-5 fache oder 1-2 fache oder 0,5-fache Stärke des Ausgangslichtleiters benachbart dem Endabschnitt ist. Vorzugsweise sind der sich verjüngende Aufnahmeraum und die durch die innere Mantelfläche begrenzte, vorzugsweise kegelartige Ausnehmung des Körpers auf einer gleichen (Kegel)achse angeordnet und weisen bevorzugt einen gleichen Spitzenwinkel auf, wobei jedoch die Spitzen des Aufnahmeraumes und der Ausnehmung vorzugsweise aufeinander zu weisen.

Der Aufnahmeraum kann als vorzugsweise gerader Kreiskegel oder vorzugsweise gerade Pyramide ausgebildet sein, dessen Längsschnitt einen Umriss in Form eines gleichschenkeligen, vorzugsweise gleichseitigen, Dreieckes aufweist und dessen Basisebene die Ausgangsquerschnittsfläche für das ausgekoppelte Licht bildet, wobei die Austrittsrichtung a des Lichtes aus dem Sammler senkrecht auf dieser Ausgangsquerschnittsfläche stehen kann. Die Anschlussfläche zwischen Aufnahmeraum und dem optischen Körper, d.h. die Lichtauskopplungsfläche des Sammlers, ist somit vorzugsweise pyramidal oder kegelförmig bzw. torusförmig ausgebildet. Die Lichtauskopplungsfläche kann in einem Spitz zusammenlaufen oder als pyramiden- oder kegelstumpf ausgeführt sein. Somit weist zweckmäßigerweise der Endabschnitt des Ausgangslichtwellenleiters eine gleiche Kreiskegelform wie der Aufnahmeraum auf. Somit kann der Endabschnitt passgenau und mit planparallelen bzw. kongruenten Lichtaustritts- und Lichteintrittsflächenabschnitten an den optischen Körper angeschlossen werden.

Die umfängliche Begrenzungsfläche des Aufnahmeraumes (z.B. eine zweite innere Mantelfläche des optischen Körpers bzw. allgemein die Auskoppelungsfläche aus dem optischen Körper) kann zumindest abschnittsweise oder vollumfänglich zumindest im Wesentlichen senkrecht zu der ersten äußeren Mantelfläche und/oder zu der ersten inneren Mantelfläche des optischen Körpers angeordnet sein. Dies kann zumindest für den Bereich der inneren und äußeren Mantelflächen am Spitzenbereich des optischen Körpers gelten. Die Mantelfläche des Aufnahmeraumes und/oder die äußere Mantelfläche und/oder die erste innere Mantelfläche des optischen Körpers können hierbei unabhängig voneinander oder gleichzeitig als Kegelmantelflächen ausgeführt sein. Allgemein können somit die Lichteinkopplungsrichtung in den Sammler und/oder die Lichtausbreitungsrichtung innerhalb des Körpers beim Auftreffen auf die umfängliche Begrenzungsfläche der Aufnahme des Ausgangslichtleiterendabschnittes zumindest im Wesentlichen senkrecht zu dieser Begrenzungsfläche des Aufnahmeraumes oder allgemein zur Auskoppelungsfläche des optischen Körpers angeordnet sein.

Vorzugsweise läuft der Endabschnitt des Ausgangslichtleiters somit kegelförmig zu, vorzugsweise spitz zu, gegebenenfalls kann er auch pilzförmig oder facettenartig ausgebildet sein. Vorzugsweise verjüngt sich der Endabschnitt des Ausgangslichtleiters zu seinem freien Ende hin, wobei er sich seitlich nicht über den Querschnitt des Ausgangslichtleiters hinaus erstreckt.

Gegebenenfalls, wenn auch deutlich weniger bevorzugt, kann die erste äußere Kegelmantelfläche des Sammlers zu einer Kegelspitze zusammenlaufen, wobei diese Spitze stirnseitig in eine Ausnehmung des Endabschnittes des Ausgangslichtwellenleiters eingreift. Die Ausnehmung des Endabschnittes kann eine Tiefe aufweisen, so dass der Endabschnitt den Sammler zumindest bis zur Höhe der ersten inneren Kegelmantelfläche, welche den Sammlerkörper ausbildet und sich zum Spitzenbereich hin verjüngt, umschließt. Gegebenenfalls kann nach einer weiteren Alternative, deutlich weniger bevorzugt, der Spitzenbereich in einen sich vom Spitzenbereich weg erstreckenden, vorzugsweise axial vorstehenden, Fortsatz auslaufen, dessen endseitige Stirnfläche zur Ankopplung des Ausgangslichtleiters ausgebildet ist.

Die ersten Kopplungsstellen können jeweils so zu der zweiten Kopplungsstelle positioniert sein, dass die Längsmittelachsen der ersten Kopplungsstellen die diesen jeweils zugewandten Ausgangsquerschnittsfläche der zweiten Kopplungsstelle schneidet. Besonders bevorzugt sind die ersten Kopplungsstellen bzw. die Längsmittelachsen der die ersten Koppelungsstellen mit der zweiten Kopplungsstelle verbindenden Lichtleitpfade unmittelbar vor der zweiten Kopplungsstellen jeweils so zu dieser positioniert, dass die Verlängerung der Längsmittelachsen der ersten Kopplungsstellen den bezüglich der Sammlerhauptachse gegenüberligenden Bereich der zweiten Kopplungsstelle nicht schneiden (anstelle der oben beschriebenen Längsmittelachsen der ersten Koppelungsstellen können jeweils auch die Mittelsenkrechten der von Abschnitten der zweiten Kopplungsstelle betrachtet werden, wobei sich diese Abschnitte entlang der Sammlerhauptachse über die gesamte Höhe der zweiten Kopplungsstelle erstrecken). Die Längsmittelachsen der ersten Koppelungsstellen unmittelbar vor den zweiten Kopplungsstellen können vielmehr lediglich die Begrenzungsrand der zweiten Koppelungsstelle schneiden oder schneiden die Wandung des Ausgangslichtwellenleiters unterhalb dessen in dem Aufnahmeraum des Sammlers angeordneten Endbereich. Hierdurch wird insgesamt ein großer Anteil des eingekoppelten Lichtes unmittelbar in die zweite Kopplungsstelle und von dieser in den Endbereich des Ausgangslichtwellenleiters eingestrahlt, wobei verhindert wird, dass das Licht praktisch den Endbereich durchstrahlt und auf der gegenüberliegenden Seite wieder durch den zweiten Koppelungsbereich austritt und sich in Richtung auf den ersten Kopplungbereich ausbreitet, was zu Licht- und/oder Effizienzverlusten des Sammlers führt.

Die Ausgangsquerschnittsfläche des Sammlers, welche den Aufnahmeraum in Lichtaustrittsrichtung nach Außen hin begrenzt, ist vorzugsweise zumindest im Wesentlichen gleich einer mittleren Eingangsquerschnittsfläche der ersten Kopplungsstellen, wobei die Abweichung ≤ ± 75-100%, ≤ ± 33-50%, vorzugsweise ≤ ± 20-25% oder ≤ ± 10-15%, besonders bevorzugte ≤ ± 5 % von der mittleren Eingangsquerschnittsfläche betragen kann. Die mittlere Eingangsquerschnittsfläche ergibt sich aus der Summe aller Eingangsquerschnittsflächen dividiert durch die Anzahl der ersten Kopplungsstellen. Sind die Eingangsquerschnittsfläche der ersten Kopplungsstellen untereinander jeweils gleich und gleich der Ausgangsquerschnittsfläche, so ergibt sich geometrisch, dass der kegelförmige Aufnahmeraum ein Querschnittsprofil in Form gleichseitigen Dreieckes aufweist. Die Längsmittelachsen der ersten Koppelungsstellen können hierbei den Begrenzungsrand der zweiten Koppelungsstelle bzw. den Rand der Ausgangsquerschnittsfläche schneiden. Diese Anordnung ist hinsichtlich der Effizienz des Sammlers optimal, als auch hinsichtlich des Durchmessers der Ausgangslichtwellenleiters, der relativ klein bemessen sein kann (nämlich so groß wie die Eingangslichtwellenleiter) und so nur ein relativ geringes Gewicht aufweist. Gegebenenfalls kann die Ausgangsquerschnittsfläche des Sammlers jedoch auch größer oder kleiner als die mittlere Eingangsquerschnittsfläche der ersten Kopplungsstellen sein. In ersterem Fall sind die Längsmittelachsen der Lichtleitpfade relativ steil zur Längsachse des Ausgangslichtleiters gestellt und dieser weist dann einen relativ großen Querschnitt und damit ein hohes Gewicht bzw. hohen Materialbedarf auf. In letzterem Fall sind die Längsmittelachsen der Lichtleitpfade relativ flach zur Längsachse des Ausgangslichtleiters gestellt und es ein zunehmender Anteil des Lichts durchstrahlt den Endbereich des Ausgangslichtleiters und breitet sich wieder zurück in Richtung auf die ersten Kopplungsstellen aus, was zu Effizienzverlusten des Sammlers führt. Die Ausgangsquerschnittsfläche und die Auskoppelungsfläche des Sammlers in den Ausgangslichtleiter können somit generell verschieden voneinander sein, die optische Auskoppelungsfläche kann allgemein größer als die geometrische Ausgangsquerschnittsfläche sein. Allgemein kann die optische Auskoppelungsfläche kleiner als die Summe aller Eingangsquerschnitteflächen sein, beispielsweise kleiner als der 3- bis 4-fache oder kleiner als der 2-fache mittlere Eingangsquerschnitt derselben.

Die Ausgangsquerschnittsfläche des Sammlers, welche den Aufnahmeraum in Lichtaustrittsrichtung nach Außen hin begrenzt, kann ≤ 1/3-1/4, ≤ 1/6-1/8 oder ≤ 1/10-1/15 oder ≤ 1/20 der Gesamteingangsquerschnittsfläche der ersten Kopplungsstellen, durch welche Licht in Sammler eingekoppelt wird, sein.

Vorzugsweise verjüngen sich die zwei Lichtleitseitenflächen (d.h. die innere und äußere, die zwischen sich den lichtleitenden Bereich des Sammlers definieren) jeweils im Basisbereich in Richtung auf den Spitzenbereich hin oder laufen jeweils in Richtung auf den Spitzenbereich hin zusammen. Die beiden Lichtleitseitenflächen, zwischen denen der lichtleitende Bereich des optischen Körpers definiert wird, verjüngen sich also jeweils zwischen dem Basisbereich und dem Spitzenbereich in Richtung auf den Spitzenbereich hin oder laufen jeweils zwischen dem Basisbereich und dem Spitzenbereich in Richtung auf den Spitzenbereich hin zusammen. Der lichtleitende Bereich des Sammlers ist somit nach innen und nach außen hin durch die lichtleitenden Seitenflächen eingeschnürt, je nach Geometrie des Sammlerkörpers z.B. in radialer Richtung (kegelförmiger Sammler) oder in lateraler Richtung (plattiger, flacher Sammler). Vorzugsweise weiten sich die erste und die zweite Lichtleitseitenfläche sich jeweils in einem Winkel von 90-150° oder 105-135° oder vorzugsweise 110-130° oder ca. 120° vom Spitzenbereich zum Basisbereich hin auf, was für die beiden Lichtleitseitenflächen unabhängig voneinander gelten kann oder mit gleichem Winkel für die erste und zweite Lichtleitseitenfläche. Die Wandstärke des lichtleitenden Bereichs zwischen der inneren und äußeren Lichtleitseitenfläche ist hierbei vorzugsweise konstant, d.h. innere und äußere Lichtleitseitenfläche sind parallel, oder erweitert sich, gegebenenfalls (weniger bevorzugt) kann sich die Wandstärke zum Spitzenbereich hin geringfügig verjüngen. Die Verjüngung der Wandstärke ist hierbei vorzugsweise geringer oder wesentlich geringer als die Verjüngung der Außenseite des Korpus des Sammlers insgesamt, beispielsweise ≤ 30-50% oder ≤ 10-20% oder ≤ 5% oder desselben oder 0-2°, d.h. wenn der Korpus außenseitig mit einem Winkel von 90° zusammenläuft, so läuft die Wandung des lichtleitenden Bereichs in Bezug auf den Winkel zwischen innerer und äußerer lichtleitender Seitenfläche vorzugsweise um weniger als 45° (50%) oder weniger als 30° (30%) zusammen.

Die äußere und/oder erste innere Mantelfläche, insbesondere jeweils Kegelmantelfläche, kann am Spitzenbereich einen Winkel (Kegelwinkel) von ca. 120° einschließen, beispielsweise 140-100° oder 135-105°, vorzugsweise 130-110° oder 125-115°. Sind die erste innere (Kegel)mantelfläche und die zweite innere (Kegel)mantelfläche senkrecht zueinander angeordnet, so ergibt sich der Spitzenwinkel der die Endabschnittaufnahme der Ausgangslichtleiters bestimmenden zweiten inneren (Kegel)mantelfläche zu ca. 60°, beispielsweise 40-80° oder 45-75°, vorzugsweise 50-70° oder 55-65°.

Der Sammler kann 2-3 oder mehr, z.B. 4-6 oder mehr oder mehr als 8-10 erste Kopplungsstellen für Eingangslichtwellenleiter aufweisen, die einen Ausgangslichtwellenleiter einspeisen. Die Anzahl der ersten Kopplungsstellen des Sammlers ist prinzipiell nicht beschränkt, es sei aus praktischen Erwägungen heraus.

Der Basisbereich des optischen Körpers kann umfänglich abgefast sein, so dass er sich im Bereich der ersten Kopplungsstellen zu dem Basisende hin vorzugsweise konisch verjüngt. Die erste Kopplungsstellen können zumindest im Wesentlichen senkrecht auf den abgefasten Bereich auftreffen und an diesem angeformt sein. Hierdurch können gegebenenfalls auch die Enden der Eingangslichtwellenleiter unmittelbar an den Basisbereich des optischen Körpers angekoppelt werden. Die Abfasung kann allgemein der Schmalseite der Wandung des optischen Körpers entsprechen, welcher durch die äußere und innere (Kegel)mantelfläche begrenzt wird. Die Wandung kann sich jedoch zur Basis hin auch verjüngen, um eine unerwünschte Auskoppelung von Licht zu vermindern.

Die vorzugsweise kreisrunden Eingangsquerschnittsflächen der ersten Kopplungsstellen können jeweils zumindest etwa gleich groß sein. Entsprechend können die vorzugsweise kreisrunden Querschnitte der Endbereiche einiger oder sämtlicher der Eingangslichtwellenleiter untereinander zumindest in etwa gleich groß sein. Die Durchmesser der ersten Kopplungsstellen und die der zugeordneten Lichtwellenleiterenden können zumindest etwa gleich groß sein.

Die ersten Kopplungsstellen können jeweils als Fortsätze des optischen Körpers ausgebildet sein, die sich radial nach außen und/oder axial von dem Körper weg erstrecken können. Vorzugsweise sind die Fortsätze innerhalb der den Körper definierenden Außenmantelfläche (bzw. deren Verlängerung) angeordnet, beispielsweise zwischen oder mittig zwischen einer inneren und äußeren (Kegel)mantelfläche desselben. Die Fortsätze können zylinderförmig bzw. kreiszylinderförmig sein, wobei die Zylinderachse die Längsmittelachse der ersten Kopplungsstellen definiert. Die Eingangsquerschnittsfläche der Fortsätze, an welcher die Lichtwellenleiter ankoppeln können, können senkrecht zur Lichteinkopplungsrichtung angeordnet sein. Alternativ können die ersten Kopplungsstellen jeweils eine Aufnahme mit vorzugsweise kreiszylindrischem Aufnahmeraum aufweisen, der jeweils in Einkopplungsrichtung in den optischen Körper bzw. in Fortsätze desselben einarbeitet sein kann. In diesen Aufnahmen kann jeweils ein Endabschnitt eines Eingangslichtwellenleiters passgenau festgelegt werden.

Bis auf etwaige als Fortsätze ausgebildete erste Kopplungsstellen kann der optische Körper rotationssymmetrisch sein.

Vorzugsweise sind die ersten Kopplungsstellen in dem Basisabschnitt gleichmäßig voneinander beabstandet. Weist der Basisabschnitt eine polygone Basisebene oder eine bevorzugt runde Basisebene auf, so sind die ersten Kopplungsstellen vorzugsweise gleich beabstandet und umfänglich in diesem Basisabschnitt angeordnet.

Vorzugsweise ist der optische Körper einstückig mit zumindest den ersten Kopplungsstellen ausgebildet ist, was seine Herstellung vereinfacht. Gegebenenfalls kann der optische Körper aber auch aus mehreren Segmenten zusammengesetzt sein, so kann der optische Körper aus Halbschalen oder mehreren Umfangssegmenten zusammengesetzt sein, die sich jeweils nur teilumfänglich um den Körper erstrecken, und/oder aus in axialer Richtung zusammengesetzten Teilsegmenten. Es können dann gegebenenfalls weitere Kopplungsstellen zwischen den oben genannten ersten Kopplungsstellen zur Lichteinkopplung und der zweiten Kopplungsstelle zur Lichtauskopplung vorgesehen sein.

Der optische Körper kann aus einem Werkstoff für Lichtwellenleiter, vorzugsweise aus Polymethylatmethacrylat (PMMA) oder einem anorganischen Glas, hergestellt sein.

Der optische Körper und/oder der Eingangslichtwellenleiter und/oder der Ausgangslichtwellenleiter bestehen vorzugsweise jeweils aus einem lichtleitenden Material, welches einen höheren optischen Brechungsindex aufweist, als das diese jeweils umgebende Material. Das umgebende Material ist zumeist Luft, es kann aber auch ein anderes Material mit einem niedrigeren Brechungsindex sein, beispielsweise Wasser oder eine andere Flüssigkeit oder auch eine feste Matrix. Der Unterschied der Brechungsindizes zwischen dem Material des optischen Körpers und/oder des Eingangslichtwellenleiters und/oder des Ausgangslichtwellenleiters einerseits und dem diese jeweils umgebenden Material andererseits kann ≥ 0,025 sein, vorzugsweise ≥ 0,05 - 0,075 oder ≤ 0,1 - 0,15, insbesondere ≥ 0,20 - 0,25. Der Unterschied kann gegebenenfalls auch oder ≥ 0,3 oder ≤ 0,35 - 0,4 betragen. Allgemein ist der Unterschied der Brechungsindizes ausreichend groß, um eine Auskoppelung von Licht und damit Wirkungsgradverluste gering zu halten. Gegebenenfalls kann auch der Brechungsindex des Licht leitenden Materials des optischen Sammlers und/oder des Eingangslichtwellenleiters und/oder des Ausgangslichtwellenleiters geringer sein, als der Brechungsindex des diese umgebenden Materials, wobei auch hier der Betrag des Unterschiedes der Brechungsindizes die oben genannten Werte einnehmen kann. Vorzugsweise bestehen (i) die Eingangslichtwellenleiter und der optische Körper und/oder (ii) der optische Körper und der Ausgangslichtwellenleiter oder (iii) die Bauteile von Eingangslichtwellenleiter, optischer Körper und Ausgangslichtwellenleiter aus demselben Material bzw. aus Materialien, welche zumindest ähnliche Brechungsindizes haben, d.h. der absolute Unterschied der Brechungsindizes der Materialien dieser drei Komponenten (Ausgangs- und Eingangswellenleiter und optischer Körper) ist vorzugsweise ≤ 1-0,75 oder ≤ 0,5-0,3 oder vorzugsweise ≤ 0,25-0,2 oder ≤ 0,1-0,15. Vorzugsweise erfolgt die Lichtleitung durch die genannten drei Komponenten durchgehend durch lichtleitendes Material über einen Lichtleitungsweg, bei welchem der Unterschied in den Brechungsindixes der Materialien ≤ 1-0,75 oder ≤ 0,5-0,3 oder vorzugsweise ≤ 0,25-0,2 oder ≤ 0,1-0,15 ist. Der Unterschied der Brechungsindizes der drei Komponenten kann ≤ 30-50% oder ≤ 10-20% des Unterschiedes der Brechungsindizes zwischen den drei genannten Komponenten optischer Körper, Eingangs- und Ausgangslichtwellenleiter zu dem diese jeweils umgebenden Material sein. Der optische Körper, der Eingangs- und der Ausgangslichtwellenleiter kann jeweils unabhängig oder in Kombination jeweils aus Materialien bestehen, deren Brechungsindex im Bereich von 1,2 bis 3,9, vorzugsweise im Bereich von 1,3 bis 3,1 oder im Bereich von 1,35 bis 2,4, liegt.

Der optische Körper kann allgemein derart ausgebildet sein, dass das eingekoppelte Licht sich frei in diesem ausbreiten kann, d.h. durch Totalreflexion an den Begrenzungsflächen des Körpers. Gegebenenfalls können die Lichtleitpfade zumindest einiger oder sämtlicher Einkoppelungsstellen, in denen das eingekoppelte Licht sich zur Auskoppelungsstelle hin ausbreitet, auch durch optische Mittel in lateraler Richtung begrenzt, so dass also die Lichtleitpfade eine geringere Breite haben als der optische Körper oder dessen Umfangsrichtung. Diese optischen Begrenzungen können durch Material mit geeigneten optischen Eigenschaften wie z. B. Brechungsindex erzeugt werden, welches in Teilbereichen des optischen Körpers einbegracht ist. Diese Materialien können mechanisch in den Körper eingebracht werden, z. B. in Ausnehmungen desselben, die durch anderes Material aufgefüllt werden können, aber auch durch geeignete Dotierungen oder innere Strukturierungen des Materials des Körpers, z. B. durch (laser)holographische Verfahren. Vorzugsweise kann sich das Licht jedoch auch in der Breite oder in Umfangsrichtung des optischen Körpers frei ausbreiten, zumindest am Basisbereich um eine Ausdehnung, die ≥ der 2-4-fachen oder ≤ 6-8-fachen Erstreckung der ersten Koppelungsstelle des jeweiligen Lichtleiters in dieser Richtung ist. In Umfangsrichtung des Körpers kann ein vollumfänglich durchgehender Lichtleitpfad bestehen, wodurch optische Verluste vermieden werden. Durch die konische Form des optischen Körpers wird das Licht in der zweiten Kopplungsstelle gebündelt und ausgekoppelt, unabhängig von dessen Ausbreitung in Umfangsrichtung des Körpers.

Ferner ist erfindungsgemäß eine optische Einrichtung mit mindestens einem erfindungsgemäßen Sammler vorgesehen. Hierbei kann die Bündelung des Lichtes und Erhöhung der Energiedichte des einfallenden Lichtes mittels des Sammlers zur Steigerung der Effizienz der Einrichtung beitragen. Die Einrichtung kann auch eine Vielzahl von Sammlern umfassen, welche kaskadenartig miteinander gekoppelt sind, um in Lichtausbreitungsrichtung die Energiedichte des Lichtes zunehmend zu erhöhen.

Allgemein kann die Einrichtung eine zum Sammler vorgeschaltete und die Eingangslichtwellenleiter aufweisende erste Vorrichtung zur Erzeugung und/oder Aufnahme von Licht sowie zur Einspeisung des Lichtes in die Eingangslichtwellenleiter aufweisen. Ferner kann eine zum Sammler nachgeschaltete und den Ausgangslichtwellenleiter aufweisende zweite Vorrichtung zur Lichtweiterleitung, Lichtverarbeitung, Energieumwandlung mit des Licht als Primärenergiequelle, Bearbeitung von Materialien mittels Licht und/oder zur Beleuchtung vorgesehen sein.

Die erste Vorrichtung kann beispielsweise eine Licht wie z.B. Sonnenlicht sammelnde Apparatur (Primärsammler) aufweisen, die jeweils Licht in die Eingangslichtwellenleiter einstrahlt und dieses bereits in gewissem Umfang bündelt oder fokussiert, wie beispielsweise Lichtreflektoren wie z.B. Offsetspiegel oder Parabolspiegel und/oder Linsen oder dergleichen. Der Primärsammler kann eine Brennweite von ≤ 20-25 mm, ≤ 10-15 mm oder ≤ 6-8 mm aufweisen, vorzugsweise ≤ 3-4 mm, so dass diese mit sehr hoher optischer Präzision herstellbar sind, um in die Lichtwellenleiter möglichst verlustfrei einkoppeln zu können. Die erste Vorrichtung kann eine Licht erzeugende Apparatur mit Leuchtkörpern wie LEDs oder mit einem Laser umfassen, deren Effizienz und Anwendungsmöglichkeiten mittels des Sammlers gesteigert werden kann.

Die zweite Vorrichtung kann beispielsweise eine Energieumwandlungsanlage, Beleuchtungsanlage und/oder Anlage zur Übermittlung optischer Signale sein. Mittels der zweiten Vorrichtung kann das gesammelte Licht beispielsweise in Wärme, elektrischen Strom und/oder Spannung oder in Licht anderer Leuchtkraft umgewandelt werden.

Die optische Einrichtung kann zur Energieumwandlung beispielsweise mit einer Fotovoltaikanlage oder einer thermische Energie nutzenden Solarkollektoranlage verbunden sein, wobei der Sammler Sonnenlicht bündeln oder konzentrieren kann und das konzentrierte Licht über den Ausgangslichtwellenleiter auf die Fotovoltaik- bzw. die Solarkollektoren zur Energieumwandlung geleitet werden kann. Es können so Fotovoltaik- bzw. Solarkollektoren in größerer Entfernung zum Sammler bzw. zum Einspeisungsort von Licht in die Eingangslichtwellenleiter angeordnet sein und das Licht praktisch verlustfrei und unabhängig von äußeren Einflüssen wie Witterung zum Kollektor und Energieumwandler transportiert werden. Durch die Beaufschlagung mit gebündeltem Licht höhrer Energiedichte kann die Effizienz der Energieumwandler wesentlich gesteigert werde. Ferner können die Fotovoltaikkollektoren in einer ihre Effizienz steigernden kühlen Atmosphäre angeordnet sein. Die Sonnenkollektoren beispielsweise eines Wohnhauses können in einem separaten Raum wie z.B. in einem Keller untergebracht sein, so dass das durch die Sonnenenergie erhitzte Wärmetauschermedium zur Wärmespeicherung nicht wie üblich unter Wärmeverlusten vom Dach zum Keller transportiert werden muss, sondern das Wärmetauschermedium kann erst am Ort der Wärmespeicherung im Keller durch das über Lichtwellenleiter in praktisch verlustfrei übertragene Sonnenlicht erhitzt wird. Gegebenenfalls kann bei Bedarf das Licht aus dem Ausgangslichtleiter zunächst durch eine Streueinrichtung wie eine Streischeibe vor Auftreffen auf den Energiewandler aufgefächert werden, falls die Ernergiedichte sonst zu hoch sein sollte.

Weiterhin kann die optische Einrichtung eine Beleuchtungseinrichtung sein, mittels welcher Außenlicht über den Sammler gebündelt durch einen oder mehrere Lichtleiter an jeden beliebigen Ort eines Gebäudes geleitet und dort zur Innen- und/oder Außenbeleuchtung eingesetzt werden kann. Das Licht kann hierzu eher gebündelt oder eher diffus zur Beleuchtung eingesetzt werden, wozu das Licht einer Streueinrichtung wie z.B. einer Streuscheibe zugeführt werden kann, um gestreut größere Bereiche des Innenraumes zu beleuchten.

Allgemein die optische Einrichtung das über mindestens einen Sammler gebündelte Licht auch mehreren zweiten Vorrichtungen bzw. Verbrauchern zuleiten, wozu in dem Lichtleitungsweg optische Weichen bzw. Verzweigungen vorgesehen sein können. Diese Verzweigungen können prinzipiell entsprechend dem erfindungsgemäßen Sammler aufgebaut sein, wobei der Ausgangslichtwellenleiter nunmehr der Lichteinspeisung in den Sammlerkörper dient und das Licht über die ersten Kopplungsstellen in weitere Lichtwellenleiter ausgekoppelt wird.

Die vorliegende Erfindung wird im Folgenden anhand einer in einer Zeichnung dargestellten Ausführungsform näher erläutert. In der Zeichnung zeigen:
- Fig. 1: eine perspektivische Ansicht eines erfindungsgemäßen optischen Sammlers,
- Fig. 2: eine Seitenansicht des Sammlers nach Fig. 1,
- Fig. 3: eine Schnittansicht des optischen Sammlers gemäß dem Schnittverlauf III-III in Figur 2,
- Fig. 4a: eine Ausschnittsvergrößerung des optischen Sammlers gemäß dem Ausschnitt IV in Figur 3, und
- Fig. 4b: eine Darstellung nach Fig. 4a mit Ausgangslichtwellenleiter,
- Fig. 5: eine schematische Darstellung einer alternativen Ausführungsform eines erfindungsgemäßen optischen Sammlers in Seitenansicht,
- Fig. 6a und 6b: jeweils eine schematische Übersicht jeweils einer Ausführungsform einer Einrichtung einem optischen Sammler bzw. mit mehreren optischen Sammlern.

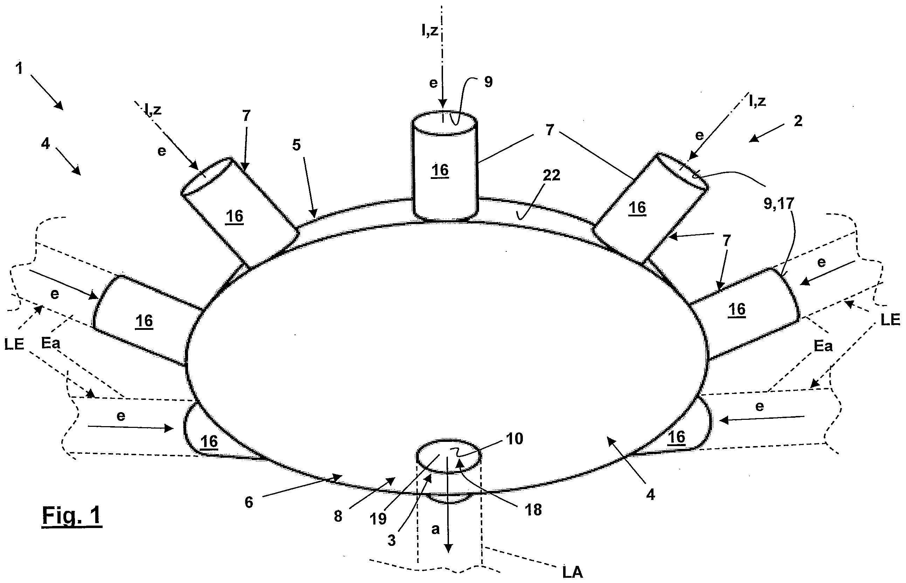

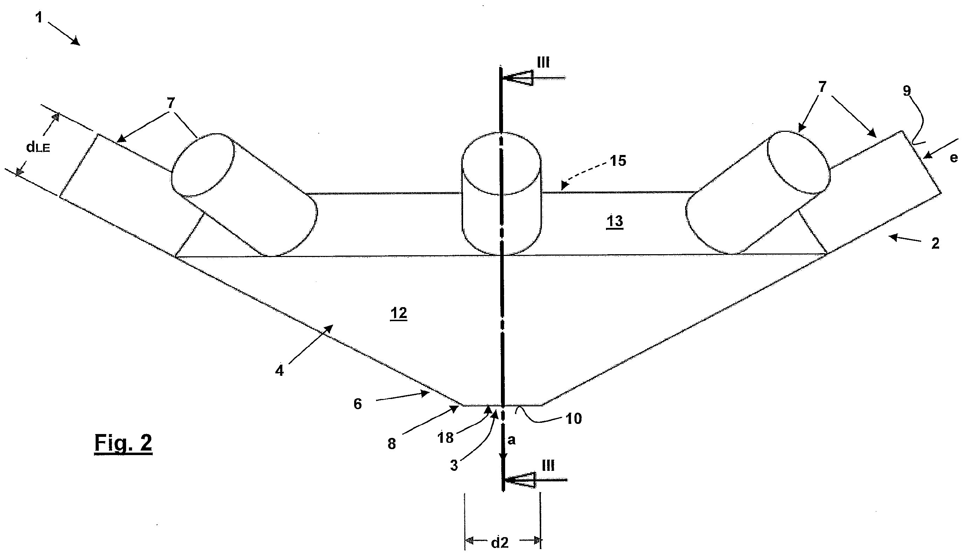

In den Figuren 1 bis 4 werden verschiedene Ansichten eines optischen Sammlers 1 mit einem optischen Eingang oder Eingangsbereich 2 zum Einkoppeln von Licht aus mehreren Eingangslichtwellenleitern LE in den Sammler 1 und einem optischen Ausgang 3 zum Auskoppeln von Licht aus dem Sammler 1 in einen Ausgangslichtwellenleiter LA gezeigt. Der optische Sammler 1 weist in der hier gezeigten Ausführungsform einen kegelartig ausgebildeten optischen Körper 4 mit einem Basisbereich 5 und einem Spitzenbereich 6 auf. In dem Basisbereich 5 ist der optische Eingang 2 mit einer Vielzahl (hier acht) ersten Kopplungsstellen 7 angeordnet, die hier umfänglich gleichmäßig voneinander beabstandet sind und in die jeweils Licht in einer Einkopplungsrichtung e einkoppelbar ist. Der Spitzenbereich 6 weist den optischen Ausgang 3 mit einer zweiten Kopplungsstelle 8 auf, so dass das Licht zumindest im Wesentlichen senkrecht mit Richtung e' auf das Austrittsfenster bzw. die Auskoppelungsfläche des optischen Körpers, hier definiert durch die unten genannte zweite innere Kegelmantelfäche, trifft und in dieser Richtung auskoppelt. Das in den ersten Kopplungsstellen eingekoppelte Licht wird dann in der Austrittsrichtung a aus dem Sammler über den Ausgangslichtwellenleiter LA weitergeleitet.

Die ersten Kopplungsstellen 7 weisen jeweils eine optische Eingangsquerschnittsfläche 9 und die zweite Kopplungsstelle 8 eine Ausgangsquerschnittsfläche 10 auf. Wie unmittelbar aus der Zeichnung ersichtlich, ist die Ausgangsquerschnittsfläche 10 kleiner als die Summe aller Eingangsquerschnittsflächen 9, nach dem Ausführungsbeispiel so groß wie eine einzelne Eingangsquerschnittsfläche. Somit wirkt der kegelartige optische Körper 4 gleichsam als optischer Trichter, indem das Licht über eine große Eingangsquerschnittsfläche, d.h. die Summe aller Eingangsquerschnittsflächen 9, in den optischen Körper 4 eingekoppelt wird, im optischen Körper 4 von dem Basisbereich 5 unter steter Vergrößerung einer Licht- bzw. Energiedichte zu dem Spitzenbereich 6 geleitet und schließlich in dem optischen Ausgang 3 mit erhöhter Lichtdichte ausgekoppelt wird. Der optische Körper kann sich somit allgemein zu seinem Spitzenbereich hin verjüngen, wobei die Wandstärke des lichtleitenden Bereichs des Körpers zumindest im Wesentlich gleich oder sich zum Spitzenbereich hin auch verbreitern kann.

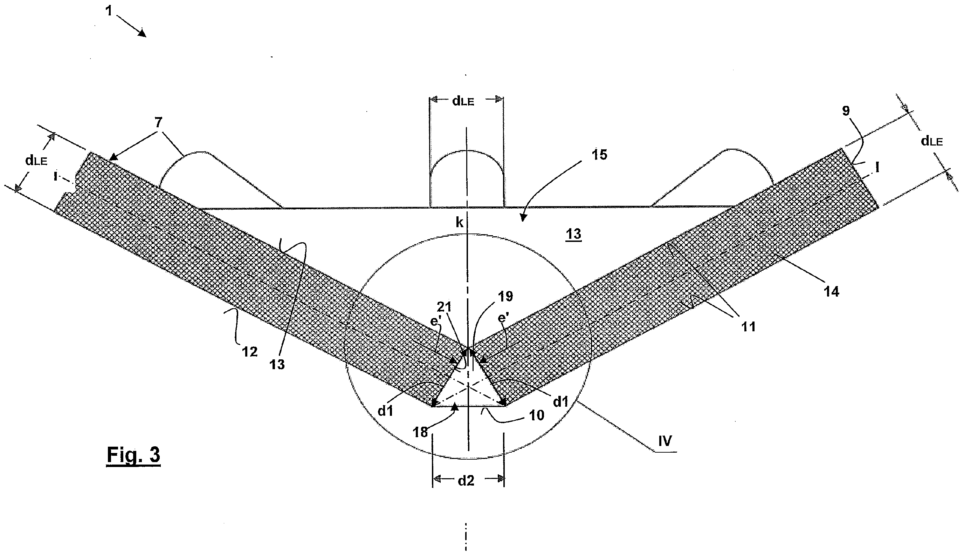

Der optische Körper 4 weist zwei Lichtleitseitenflächen 11 auf, zwischen denen das eingekoppelte Licht unter Totalreflexion an denselben zum Spitzenbereich 6 hin geleitet wird. In der hier gezeigten Ausführungsform des Sammlers 1 mit dem kegelartigen Körper 4 wird eine Lichtleitseitenfläche durch eine äußere Kegelmantelfläche 12 gebildet, wobei die Einkopplungsrichtung e der einzelnen ersten Einkopplungsstellen jeweils parallel zur der äußeren Kegelmantelfläche 12 verlaufen. Der optische Körper 4 ist hohlkegelförmig ausgebildet (siehe Fig. 3). Eine weitere Lichtleitfläche wird durch eine innere Kegelmantelfläche 13 ausgebildet, wobei beide Kegelmantelflächen 12,13 parallel und bezüglich einer Kegelachse k bzw. der Sammlerhauptachse koaxial zueinander angeordnet sind. Beide Kegelmantelflächen 12, 13 schließen einen gleichen ersten Spitzenwinkel α ein. Beide Kegelmantelflächen 12, 13 begrenzen eine Wandung 14. Die Wandstärke kann am Basisbereich 5 und vorzugsweise auch über die gesamte Höhe des Sammlers (d. h. in Lichtausbreitungsrichtung) im Wesentlichen gleich dem Durchmesser d₁ der Eingangsquerschnittsfläche der ersten Kopplungsstellen sein. Die optische Eingangsquerschnittsfläche 9 der ersten Kopplungsstellen 7 kann sich somit über die gesamte Breite der Wandung 14 erstrecken. Die innere Kegelmantelflächen 13 begrenzt ihrerseits eine Ausnehmung 15, die sich unter konischer Verjüngung von dem Basisbereich 5 zu dem Spitzenbereich 6 hin erstreckt und somit einen Hohlkegel darstellt, der gegebenenfalls auch mit einem Material gefüllt sein kann, welches nicht lichtleitend ist oder in welches das zwischen den Lichtleitseitenflächen geführte Licht praktisch nicht eindringen kann. Somit wird das Licht geradlinig und verlustfrei von dem Basisbereich 5 zu dem Spitzenbereich 6 hin geführt, was allgemein gelten kann. Unter Umständen kann jedoch allgemein die Wandung des optischen Sammlers im Querschnitt bzw. in Lichtausbreitungsrichtung auch nichtgerdlinig, z.B. bogenförmig gekrümmt oder winkelig, ausgebildet sein, kann. Hierdurch kann der Sammler beispielsweise im Basisbereich einen kleineren Öffnungswinkel als im Spitzenbereich aufweisen, so den Außendurchmesser des Sammlers zu begrenzen. Die Wandstärke des Sammlers über dessen Höhe kann dennoch zumindest im Wesentlichen konstant bleiben. Gegebenenfalls können (weniger bevorzugt) die beiden Lichtleitseitenflächen allgemein oder hier die beiden Kegelmantelflächen 12, 13 einen Winkel zueinander einschließen und beispielsweise in dem Ausführungsbeispiel (vorzugsweise nur geringfügige) unterschiedliche Winkel zu der Kegelachse k bzw. der Sammlerhauptachse und/oder der Einkoppelungsrichtung des Lichtes in den Sammler aufweisen, auch wenn dies gegenüber einer parallelen Anordnung der beiden Lichtleitseitenflächen nicht bevorzugt ist. So können beispielsweise unabhängig voneinander die innere und/oder die äußere Lichtleitseitenfläche (bzw. Kegelmantelfläche 12, 13) gegenüber der in der Figur dargestellten Position um ± 20-30° oder vorzugsweise um nur ± 5-10° gegenüber der dargestellten Stellung gegenüber der Kegelachse k bzw. gegenüber der Einkoppelungsrichtung geneigt angeordnet sein, wodurch sich der Querschnitt der Wandung des lichtleitenden Bereiches des optischen Sammlers zum Spitzenbereich hin geringfügig oder verjüngen oder (eher bevorzugt) geringfügig erweitern kann, wobei die lichtleitende Wandung auch zum Inneren des Sammlers hin durch eine (hier kegelförmige) zum Spitzenbereich zulaufende Lichtleitfläche begrenzt wird.

Die zwei Lichtleitseitenflächen 11 im Basisbereich, zwischen den der lichtleitende Bereich des optischen Körpers definiert wird, verjüngen sich somit jeweils in Richtung auf den Spitzenbereich hin bzw. laufen jeweils in Richtung auf den Spitzenbereich hin zusammen. Die erste und die zweite Lichtleitseitenfläche 11 weiten sich jeweils in einem Winkel von 90-150° vom Spitzenbereich zum Basisbereich hin auf, was für die erste und zweite Lichtleitseitenfläche unabhängig voneinander gelten kann oder mit gleichem Winkel für die erste und zweite Lichtleitseitenfläche.

Die ersten Kopplungsstellen 7 weisen jeweils einen vorzugsweise kreiszylinderförmigen Fortsatz 16 mit einer Zylinderachse z, die eine Längsmittelachse 1 der ersten Kopplungsstellen 7 bildet, auf. Die Längsmittelachse 1 verläuft parallel zur Einkoppelungsrichtung e und parallel der Lichtleitseitenflächen 11. Die Längsmittelachse 1 kann die Eingangsquerschnittsfläche 9, die hier durch eine Stirnfläche 17 des jeweils zugeordneten Fortsatzes 16 gebildet wird und zugleich als Ankopplungsfläche für einen Eingangslichtwellenleiter LE dient, senkrecht schneiden. Die Fortsätze 16 erstrecken sich somit fluchtend zu der radial äußeren oder zu beiden Lichtleitseitenfläche 11 von dem Spitzenbereich 6 weg.

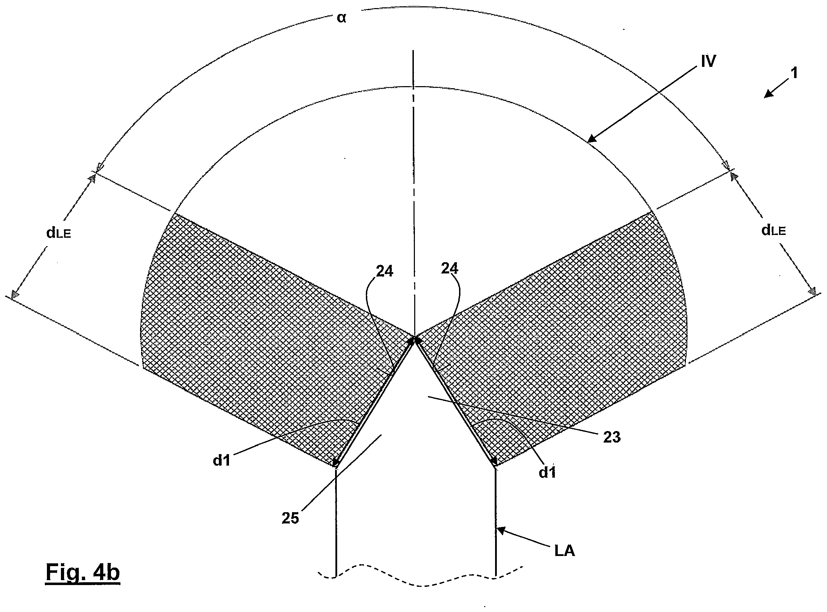

Die zweite Kopplungsstelle 8 weist eine Aufnahme 18 für einen Endabschnitt Ea des Ausgangslichtwellenleiter LA auf. Die Aufnahme 18 weist einen Aufnahmeraum bzw. Hohlraum 19 auf, der eine die Ausgangsquerschnittsebene 10 bildende Basisebene 20 umfasst, welche kreisförmig ausgeführt sein kann. Durch die Ausgangsquerschnittsebene verläßt das Licht den Bereich des Sammlers. Der Aufnahmeraum 19 verjüngt sich von der Basisebene 20 in Richtung zum Basisbereich des Sammlers hin und ist vorzugsweise kegelförmig mit einer zweiten inneren Kegelmantelfläche, vorzugsweise Mantelfläche eines Kreiskegels, 21 ausgebildet. Die zweite innere Kegelmantelfläche 21 stellt hier somit die Lichtauskoppelungsfläche aus dem Sammler bzw. dem optischen Körper dar, die zudem vorzugsweise auch eine Einkoppelung von aus dem Endabschnitt des Ausgangslichtleiters zurückgestreutem Licht vermindert oder minimiert. Diese Auskoppelungsfläche ist vorzugsweise derart angeordnet, dass das in dem optischen Körper geleitete Licht vorzugsweise senkrecht auf diese Fläche fällt und das Licht diese Fläche praktisch verlustfrei von der Eintrittsseite her durchdringen kann. Durch diese innere Begrenzungsfläche der Aufnahme wird das Licht somit aus dem Sammler ausgekoppelt und kann in den Endabschnitt des Ausgangslichtleiters eindringen, der vorzugsweise an der gesamten inneren Begrenzungsfläche der Aufnahme flächig und spaltfrei anliegt. Aufgrund der Verbindung der beiden Bauteile, dem Sammler 1 einerseits und dem Endabschnitt des Ausgangsleiters andererseits, genauer gesagt, dem von dem Aufnahmeraum 19 aufgenommenen Bereich 23 des Endabschnittes, kann an der Verbindungsfläche 24 eine Totalreflexion von Licht erfolgen, welches aus dem Inneren 25 des Endabschnittes in geeignetem Winkel auf die Verbindungsfläche 24 fällt und welches hierdurch in den Endabschnitt und weiter in den Ausgangslichtleiter LA zurück reflektiert wird. Verluste von Licht, welches bereits in den Endabschnitt eingekoppelt hat, werden somit deutlich vermindert, was die Effizienz des Sammlers deutlich erhöht (Fig. 4b).

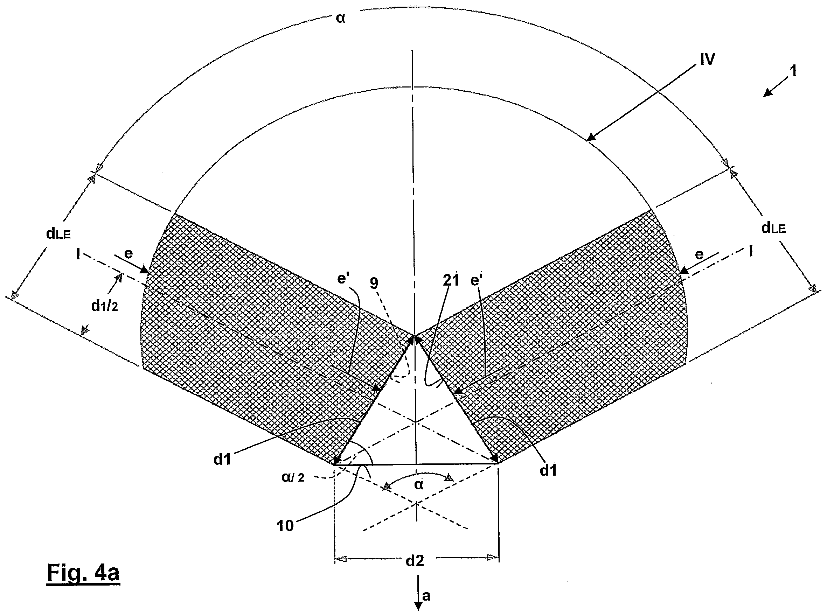

Die Mantelfläche der Aufnahme 18, die vorzugsweise eine Kreiskegelmantelfläche darstellt, weist eine Länge d₁ auf. Diese Länge d₁ kann zumindest im Wesentlichen gleich dem Durchmesser d_{LE} der Eingangsquerschnitte 9 der einzelnen ersten Kopplungsstellen sein. Die Mantelflächenlänge d₁ und die Ausgangsquerschnittsebene 10 mit dem Durchmesser d₂ der zweiten Kopplungsstellen können gleich groß sein und bilden in dem in Fig. 3 und 4 gezeigten Querschnitten des Sammlers 1 ein gleichseitiges Dreieck. Die Längsmittelachsen 1 der hier im Schnitt gezeigten beiden ersten Kopplungsstellen bzw. die Längsmittelachsen der Lichtleitpfade unmittelbar vor der Aufnahme (entsprechend den Senkrechten auf der Mantelfläche der Aufnahme) können jeweils gerade den Rand der Ausgangsquerschnittsebene 10 schneiden. Die Längsmittelachse 1 bzw. Längsmittelachsen der Lichtleitpfade bilden somit vorzugsweise die Verlängerungen der Winkelhalbierenden der Querschnitte des Aufnahmeraumes in Bezug auf die in Lichtleitrichtung gegenüberliegende Ecke des Aufnahmeraumes. Der hier als erster Spitzenwinkel α bezeichnete Spitzenwinkel der ersten äußeren Kegelmantelfläche 12 und der ersten inneren Kegelmantelfläche 13 betragen jeweils 120°. Dieser Winkel, der sich durch die gleichen Durchmessern d₁,d₂ der Mantelflächenlänge und der Ausgangsquerschnittsebene 9,10 ergibt (siehe Figur 4a), ist optimal, da hierdurch ein großer Teil des eingekoppelten Lichtes unmittelbar in den Ausgangslichtwellenleiter LA ausgekoppelt wird und zugleich ein möglicher Anteil an in dem optischen Körper rückgestreutem Licht gering gehalten werden kann, zudem kann der Ausgangsquerschnitt des Sammlers und damit der Durchmesser des Ausgangslichtleiters relativ klein gehalten werden, so dass eine große Erhöhung der Lichtenergiedichte im Ausgangslichtleiter resultiert. Zudem weist ist der Basisbereich des Sammlers ausreichend groß, um eine Vielzahl vom Eingangslichtleitern ankoppeln zu können. Gegebenenfalls kann der Durchmesser d₂ des Ausgangslichtleiters aber auch bis zum 1,5-, bis zum 2- oder bis zum- 3- bis 5-fachen des Durchmessers d_{LE} der Eingangsquerschnitte 9 der einzelnen ersten Kopplungsstellen sein, ohne hierauf beschränkt zu sein, was allgemein gelten kann.

Der Endabschnitt Ea des Ausgangslichtwellenleiters LA ist zugespitzt und formgetreu zu dem Aufnahmeraum 19 in diesen eingepasst, so dass sich eine möglichst spaltfreie, vollflächige Anlage des Endabschnittes mit der Begrenzungsfläche der Aufnahme ergibt, gegebenenfalls unter Einsatz einer Klebemittelschicht, vorzugsweise ohne eine solche. Der Endabschnitt Ea weist eine gleiche kreiskegelige Form wie der Aufnahmeraum 19 auf, so dass er passgenau und mit seiner Kegelmantelfläche planparallel zu der zweiten inneren Kegelmantelfläche 21 in der Aufnahme 18 festgelegt werden kann.

Der Basisabschnitt 5 ist umfänglich kegelig abgefast, so dass er eine als zweite äußere Kegelmantelfläche 22 bezeichnete Kegelmantelfläche aufweist, die rechtwinklig zu der ersten äußeren Kegelmantelfläche 12 angeordnet ist.

Die erste äußere Kegelmantelfläche und/oder die erste innere Kegelmantelfläche des optischen Körpers können somit zumindest im Wesentlichen senkrecht zur Begrenzungsfläche der Aufnahme stehen, welche eine (zweite) innere Kegelmantelfläche des Körpers bilden kann. Die Wandstärke des optischen Körpers zwischen der ersten äußeren und der ersten inneren Kegelmantelfläche ist idealer Weise gleich dem Durchmesser der Eingangsquerschnittsfläche der Lichteinkopplungsstellen sein.

Der optische Körper mit den ersten Kopplungsstellen 7 und der zweiten Kopplungsstelle 8 ist einstückig aus einem Lichtwellenleiterwerkstoff, hier aus Polymethylatmethacrylat (PMMA), hergestellt. Für den Sammler und die Eingangs- und/oder Ausgangslichtleiter kann allgemein derselbe Werkstoff verwendet werden. Der optische Körper und/oder der Eingangslichtwellenleiter und/oder der Ausgangslichtwellenleiter können jeweils aus demselben lichtleitenden Material bestehen, beispielsweise PMMA.

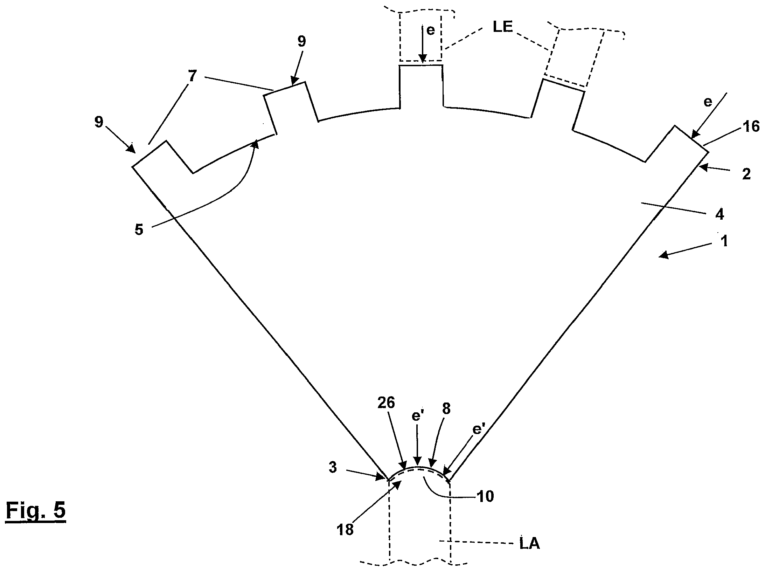

Fig. 5 zeigt eine alternative Ausführungsform eines erfindungsgemäßen optischen Sammlers 1, der einen flachen, scheibenförmigen Korpus aufweist, welcher zumeist im Wesentlichen eine konstante Dicke aufweisen kann. Der Korpus hat hier im Wesentlichen die Form eines Kreissegmentes. Es ist ein optischer Eingang 2 zum Einkoppeln von Licht aus mehreren Eingangslichtwellenleitern LE in den Sammler, die hier zumindest im Wesentlichen in einer Ebene liegen können, und ein optischer Ausgang 3 zum Auskoppeln von Licht aus dem Sammler in einen Ausgangslichtwellenleiter LA vorgesehen. Der Sammler weist auch hier einen optischen Körper 4 mit einem Basisbereich 5, in dem der optische Eingang 2 mit mindestens zwei ersten Kopplungsstellen 7 angeordnet ist, und einen Spitzenbereich 6, in dem der optische Ausgang mit einer zweiten Kopplungsstelle 8 angeordnet ist, auf. Zwischen den ersten Einkoppelungsstellen können auch taschenförmige Ausnehmungen in dem Korpus vorgesehen sein, die sich zum Basisbereich hin öffnen und sich über die Dicke des Korpus erstrecken können, und so den lichtleitenden Bereich des Korpus begrenzen. Die hierdurch herausgebildeten Bereiche des Korpus können im Wesentlichen die Fortsätze 16 weiter fortführen. Die ersten Kopplungsstellen weisen auch hier jeweils eine optische Eingangsquerschnittsfläche 9 und die zweite Kopplungsstelle eine Ausgangsquerschnittsfläche 10 auf, wobei die Ausgangsquerschnittsfläche kleiner als die Summe aller Eingangsquerschnittsflächen ist. Die gegenüberliegenden Flachseiten des optischen Körpers stellen Lichtleitseitenflächen desselben dar, welche von dem Basisbereich zu dem Spitzenbereich hin verlaufen und welche zumindest etwa in gleich bleibendem oder sich zum Spitzenbereich hin vergrößerndem Abstand zueinander verlaufen können. Die ersten Kopplungsstellen sind derart angeordnet sein, dass diese zwischen die Lichtleitseitenflächen Licht einkoppeln. Es versteht sich, dass diese Seitenflächen gegebenenfalls auch gewölbt, z.B. nach Außen gewölbt oder strukturiert sein können begrenzt wird. Die Auskoppelungsfläche 26 bzw. das Austrittsfenster des Sammlers kann ebenfalls bogenförmig gewölbt sein oder entsprechend der Anzahl der Eingangslichtwellenleiter mehreckig ausgeführt sein. Diese Auskoppelungsfläche 26 des Sammlers bzw. optischen Körpers entspricht der zweiten inneren Kegelmantelfläche 21 des Sammlers nach den Figuren 1-4 und kann auch hier eine verspiegelte (z.B. halbdurchlässig verspiegelte) Auskoppelungsfläche darstellen. Diese Auskoppelungsfläche kann auch hier die Verbindungsfläche mit dem Endabschnitt des Ausgangslichtleiters LA und somit auch eine Aufnahme 18 für den genannten Endabschnitt definieren. Das Licht tritt dann in Austrittsrichtung a aus dem Sammler aus.

Der Korpus weist Ansätze 16 für die Ankoppelung der Eingangslichtwellenleiter LE auf. Das über die Eingangslichtleiter einkoppelnde Licht kann in senkrechter Richtung e auf die Eingangsquerschnitten 9 einfallen. Das Licht kann unabhängig hiervon auch in senkrechter Richtung e' auf die Auskoppelungsfläche 26 des Sammlers fallen, vorzugsweise unter linearer Ausbreitung des Lichtes in dem optischen Körper. Auch die Lichteinfallrichtung e kann im Wesentlichen senkrecht zu der Auskoppelungsfläche 26 stehen.

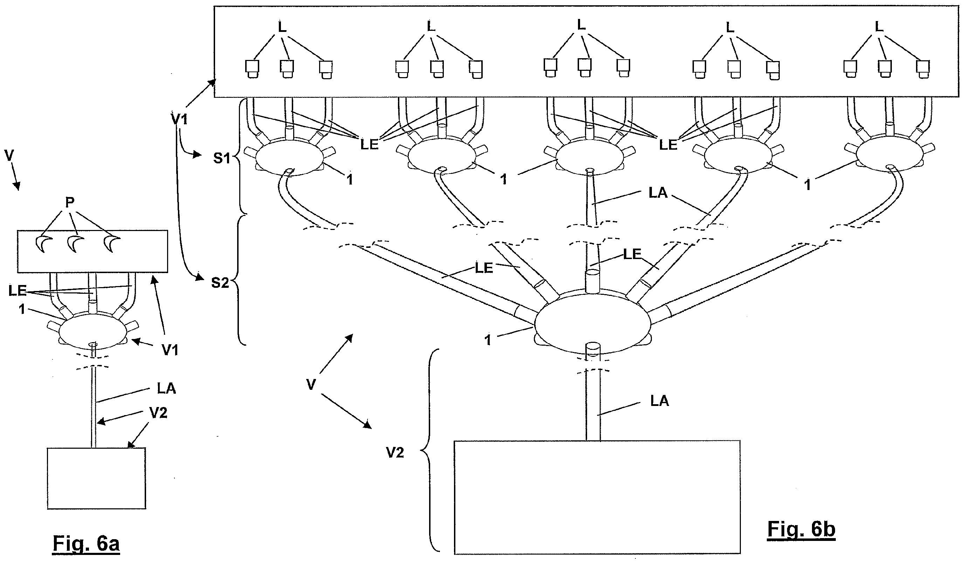

In den Figuren 6a und 6b sind beispielhaft schematisch mögliche Verwendungen des Sammlers 1 in einer Einrichtung V gezeigt. Nach Fig. 6a kann die Einrichtung E eine zum Sammler 1 vorgeschaltete und die Eingangslichtwellenleiter LE aufweisende erste Vorrichtung E1 zur Aufnahme von Licht und eine zum Sammler 1 nachgeschaltete und eine den Ausgangslichtwellenleiter LA aufweisende zweite Vorrichtung V2 zur Energieumwandlung aufweisen. Zwischen den beiden Vorrichtungen V1, V2 ist der Sammler 1 angeordnet, der an die Lichtwellenleiter LE, LA angeschlossen ist. Der besseren Übersicht halber sind nur einige der vorgesehenen Eingangslichtwellenleiter LE zwischen der ersten Vorrichtung V1 und dem Sammler 1 dargestellt. Von dem Sammler 1 führt ein Ausgangslichtwellenleiter LA zu der zweiten Vorrichtung V2, die entfernt zu der ersten Vorrichtung V1 und dem Sammler 1 angeordnet ist. Die Einrichtung V selbst kann eine Solaranlage, z.B. eine thermische Solaranlage, sein. Die erste Vorrichtung V1 kann kleine Parabolspiegel P oder andere Einrichtungen wie Vorsatzsammellinsen zur Einkopplung von Licht in die Eingangslichtwellenleiter LE aufweisen. Das Licht aus dem Sammler 1 wird in dem Ausgangslichtwellenleiter LA verlustfrei zu der entfernt angeordneten zweiten Vorrichtung V2 weitergeleitet.

Die zweite Vorrichtung V2 kann zur Energieumwandlung oder als Beleuchtungseinrichtung dienen, ohne hierauf beschränkt zu sein, hier zur Umwandlung der Lichtenergie in Wärmeenergie mit hier nicht gezeigten üblichen Sonnenkollektoren und Wärmetauschern oder alternativ mit Fotovoltaikkollektoren.

In Figur 6b ist eine zweite Ausführungsform der Einrichtung V gezeigt, in der eine Vielzahl von optischen Sammlern 1 vorgesehen sind, die kaskadenartig in mehreren Stufen hintereinander geschaltet sind, was unabhängig von diesem Ausführungsbeispiel der Fall sein kann. In einer ersten Stufe 1 ist eine Vielzahl von optischen Sammlern 1 parallel zueinander angeordnet. Diese Sammler 1 der ersten Stufe S1 sind jeweils an eine Vielzahl von Eingangslichtwellenleitern LE angeschlossen, von denen hier lediglich einige dargestellt sind. In Reihe geschaltet zu den Sammlern 1 der ersten Stufe S1 ist hier ein Sammler 1 einer zweiten Stufe S2 vorgesehen, wobei auch die zweite Stufe bei Bedarf mehrere Sammler umfassen kann und wobei mehrere (weitere) Kaskadenstufen vorgesehen sein können. In die Eingangslichtwellenleiter LE wird in der ersten Vorrichtung V1 Licht durch geeignete Einrichtungen eingekoppelt, beispielsweise aus Leuchtdioden (LEDs) L. Das Licht, welches durch die Sammler 1 der ersten Stufe in die an ihnen angeschlossenen Ausgangslichtwellenleiter LA eingekoppelt wird, wird in einen oder mehrere Sammlern 1 der zweiten Stufe S2 eingekoppelt, in demselben weiter gebündelt und schließlich über den zugehörigen Ausgangslichtwellenleiter LA dieses Sammlers an die entfernt angeordnete zweite Vorrichtung V2 weitergeleitet, die hier beispielsweise als Beleuchtungsanlage oder auch als Energiewandler wie z.B. Solar- oder Fotovoltaikanlage konzipiert sein kann. Allgemein kann hierdurch auch Licht aus verhältnismäßig schwachen Lichtquellen in gewünschtem Maße gebündelt werden.

Durch die erfindungsmäße Beleuchtungseinrichtung kann somit das über die Sammler 1 gesammelte Licht einem zu beleuchtenden Gegenstand, z.B. einem Gebäudeinneren, zugeleitet werden. Die Vorrichtung V2 kann das Licht über eine Streueinrichtung wie einen Diffusor ausgestrahlten, um unerwünscht hohe Lichtintensitäten innerhalb des Gebäudes oder an dem jeweiligen Objekt zu vermeiden.

Die Vorrichtungen V2 können allgemein auch Verzweigungen aufweisen oder solche sind den Vorrichtungen vorgeschaltet, um das durch den oder die Sammler gebündelte und über eine oder einige wenige Ausgangslichtwellenleiter geführte Licht an gewünschten Stellen auskoppeln und mehreren Verbrauchern wie z.B. Vorrichtungen V2 zuführen zu können. Die Verzweigungen können entsprechend dem Sammler mit umgekehrter Lichtfortpflanzungsrichtung aufgebaut sein.

Das in die Eingangslichtwellenleiter eingekoppelte Licht ist jeweils vorzugsweise Sonnenlicht, gegebenenfalls auch Licht anderer Lichtquellen.

### Bezugszeichenliste

- 1: Sammler
- 2: Eingang
- 3: Ausgang
- 4: Körper
- 5: Basisbereich
- 6: Spitzenbereich
- 7: erste Kopplungsstelle
- 8: zweite Kopplungsstelle
- 9: Eingangsquerschnittsfläche
- 10: Ausgangsquerschnittsfläche
- 11: Lichtleitfläche
- 12: erste äußere Kegelmantelfläche
- 13: erste innere Kegelmantelfläche
- 14: Wandung
- 15: Ausnehmung
- 16: Fortsatz
- 17: Stirnfläche
- 18: Aufnahme
- 19: Aufnahmeraum
- 20: Basisebene
- 21: zweite innere Kegelmantelfläche
- 22: zweite äußere Kegelmantelfläche
- 23: Bereich des Endabschnittes
- 24: Verbindungsfläche
- 25: Inneres des Endabschnittes
- 26: Auskoppelungsfläche
- Ea: Endabschnitt
- LE: Eingangslichtwellenleiter
- LA: Ausgangslichtwellenleiter
- P: Parabolspiegel
- L: Leuchtdiode
- V: Einrichtung
- V1: erste Vorrichtung
- V2: zweite Vorrichtung
- α: Spitzenwinkel
- a: Austrittsrichtung
- e: Einkopplungsrichtung
- e': Auskoppelungsrichtung
- 1: Längsmittelachse
- k: Kegelachse
- z: Zylinderachse

## Patentansprüche

1. Optischer Sammler (1) mit einem optischen Eingang (2) zum Einkoppeln von Licht aus mehreren Eingangslichtwellenleitern (LE) in den Sammler und einem optischen Ausgang (3) zum Auskoppeln von Licht aus dem Sammler in einen Ausgangslichtwellenleiter (LA), wobei der Sammler einen optischen Körper (4) mit einem Basisbereich (5), in dem der optische Eingang mit mindestens zwei ersten Kopplungsstellen (7) angeordnet ist, und einem Spitzenbereich (6), in dem der optische Ausgang mit einer zweiten Kopplungsstelle (8) angeordnet ist, aufweist, wobei die ersten Kopplungsstellen jeweils eine optische Eingangsquerschnittsfläche (9) und die zweite Kopplungsstelle eine Ausgangsquerschnittsfläche (10) aufweisen und wobei die Ausgangsquerschnittsfläche kleiner als die Summe aller Eingangsquerschnittsflächen ist wobei ferner der optische Körper von zwei Lichtleitseitenflächen (11) begrenzt wird, die von dem Basisbereich (5) zu dem Spitzenbereich (6) hin verlaufen und die zumindest etwa in gleich bleibendem oder sich zum Spitzenbereich hin vergrößerndem Abstand zueinander verlaufen, und dass die ersten Kopplungsstellen (7) derart angeordnet sind, dass diese zwischen die Lichtleitseitenflächen (11) Licht in einer Einkopplungsrichtung (e) einkoppeln, wobei der optische Körper (4) kegelartig ausgebildet ist und eine äußere Kegelmantelfläche (12) aufweist und der optische Körper von zwei als Kegelmantelflächen ausgebildeten Lichtleitseitenflächen (11), der äußeren Kegelmantelfläche (12) und einer inneren Kegelmantelfläche (13), begrenzt wird, wobei die innere Kegelmantelfläche einen sich zum Spitzenbereich hin verjüngenden Hohlkegel oder Kegel 15 aus zumindest im Wesentlichen nicht lichtdurchdrungenem Material ausbildet, wobei die erste und die zweite Lichtleitseitenfläche (11) sich jeweils in einem Winkel von 90-150° vom Spitzenbereich (6) zum Basisbereich (5) hin aufweiten, **dadurch gekennzeichnet, dass** die den ersten Kopplungsstellen (7) zugeordneten Einkopplungsrichtungen (e) jeweils in ihrem Betrag um weniger als 30° von der ersten und/oder zweiten Lichtleitseitenfläche (11) abweichen, und dass die zweite Kopplungsstelle (8) eine Aufnahme (18) für einen Endabschnitt (EA) des Ausgangslichtwellenleiters (LA) aufweist, in die der Endabschnitt derart eingepasst ist, dass aus der zweiten Koppelungsstelle (8) austretendes Licht überwiegend über den Endabschnit in den Ausgangslichtwellenleiter einkoppelt, wobei die Aufnahme (18) durch eine Innenfläche (21) des Sammlers begrenzt ist, die zumindest in etwa senkrecht zu zumindest einer oder beiden der Lichtleitseitenflächen (11) des optischen Körpers angeordnet ist.

2. Sammler nach Anspruch 1, **dadurch gekennzeichnet, dass** die Aufnahme (18) sich zum Inneren des Sammlers hin und/oder dass der Endabschnitt (EA) des Ausgangslichtwellenleiters (LA) sich zu seinem Ende hin verjüngen.

3. Sammler nach einem der Ansprüche 1 bis 2, **dadurch gekennzeichnet, dass** die ersten Kopplungsstellen (7) jeweils eine Längsmittelachse (1) aufweisen und dass die Längsmittelachse der ersten Kopplungsstellen die Ausgangsquerschnittsfläche (10) der zweiten Kopplungsstelle schneidet.

4. Sammler nach einem der Ansprüche 1 bis 3, **dadurch gekennzeichnet, dass** die Ausgangsquerschnittsfläche (10) des Sammlers größer oder gleich einer mittleren Eingangsquerschnittsfläche (9) der ersten Kopplungsstellen ist.

5. Sammler nach einem der Ansprüche 1 bis 4, **dadurch gekennzeichnet, dass** die zweite Koppelungsstelle (8) eine Lichtauskoppelungsfläche (26) aufweist, die derart angeordnet ist, dass das auskoppelnde Licht senkrecht oder mit einem Winkel von 60 - 120° auf diese fällt.

6. Sammler nach einem der Ansprüche 1 bis 5, **dadurch gekennzeichnet, dass** die innere und/oder äußere Kegelmantelflächen (13, 12) jeweils einen Kegelspitzenwinkel von etwa 90-150° einschließen.

7. Sammler einem der Ansprüche 1 bis 6, **dadurch gekennzeichnet, dass** die ersten Kopplungsstellen (7) jeweils als nach außen vorstehende Fortsätze (16) des Sammlers ausgebildet sind.

8. Sammler nach einem der Ansprüche 1 bis 7, **dadurch gekennzeichnet, dass** der optische Körper (4) einstückig mit den ersten und/oder zweiten Kopplungsstellen (7, 8) ausgebildet ist.

9. Sammler nach einem der Ansprüche 1 bis 8, **dadurch gekennzeichnet, dass** die ersten Kopplungsstellen (7) jeweils eine Lichteinkopplungsrichtung (e) aufweisen, die zumindest etwa parallel zur äußeren Kegelmantelfläche (12) verläuft.

10. Sammler nach einem der Ansprüche 1 bis 9, **dadurch gekennzeichnet, dass** die zwei Lichtleitseitenflächen (11), zwischen denen der lichtleitende Bereich des Sammlers begrenzt wird, im Basisbereich (5) sich jeweils in Richtung auf den Spitzenbereich (6) hin verjüngen oder zusammenlaufen.

11. Sammler nach einem der Ansprüche 1 bis 10, **dadurch gekennzeichnet, dass** die Lichtleitseitenflächen (11) eine Wandung mit einer Wandstärke begrenzen und dass sich der optische Eingangsquerschnitt (9) der ersten Kopplungsstellen über zumindest fast die gesamte Wandstärke erstreckt.

12. Sammler nach einem der Ansprüche 1 bis 11, **dadurch gekennzeichnet, dass** die zweite Kopplungsstelle (8) derart ausgebildet ist oder mit Mitteln versehen ist, dass diese oder dass diese Mittel einen Eintritt von Rückstreulicht aus einem an die zweite Kopplungsstelle ankoppelnden Ausgangslichtwellenleiter (LA) zurück in den optischen Sammler (1) im Vergleich zu einem optisch durchgehenden Lichtleitungspfad aus dem lichtwellenleitenden Material des optischen Körpers (4) des Sammlers verringern oder minimieren.

13. Einrichtung mit zumindest einer lichtoptischen Apparatur, **dadurch gekennzeichnet, dass** die Einrichtung mindestens einen Sammler (1) nach einem der Ansprüche 1 bis 12 aufweist, wobei die Einrichtung eine dem Sammler (1) vorgeschaltete und die Eingangslichtwellenleiter (LE) aufweisende Vorrichtung (V1) aufweist, die Licht erzeugende und/oder Licht sammelnde Apparaturen zur Einspeisung des Lichtes in die Eingangslichtwellenleiter (LE) aufweist und/oder eine dem Sammler (1) nachgeschaltete und den Ausgangslichtwellenleiter (LA) aufweisende Vorrichtung (V2) zur Weiterverarbeitung oder Nutzung des Lichtes.

14. Einrichtung nach Anspruch 13, **dadurch gekennzeichnet, dass** die dem Sammler (1) nachgeschaltete und den Ausgangslichtwellenleiter (LA) aufweisende Vorrichtung (V2) eine Beleuchtungsvoriichtung, eine Energiewandlungsvorrichtung, oder eine Vorrichtung zur Übermittlung eines lichtoptischen Signales ist.

## Claims

1. Optical collector (1), comprising an optical input (2) for coupling light from several input light guides (LE) into said collector, and an optical output (3) for decoupling light from said collector into an output light guide (LA), wherein said collector has an optical body (4) with a base area (5) in which the optical input with at least two first coupling points (7) is arranged, and with a tip area (6) in which the optical output with a second coupling point (8) is arranged, wherein the first coupling points respectively have an input cross sectional area (9) and the second coupling point has an output cross sectional area (10) and wherein the output cross sectional area is smaller than the sum of all the input cross sectional areas and wherein further said optical body is bounded by two light guide lateral surfaces (11) extending from the base area (5) to the tip area (6) and extending to each other with an approximately constant spacing or a spacing increasing towards the tip area, and that the first coupling points (7) are arranged in such a manner that the same couple light between the light guide lateral surfaces in an input-coupling direction (e), wherein the optical body (4) is conically shaped and has an outer conical surface (12) and the optical body is bounded by two light guide lateral surfaces (11) formed as conical surfaces, said outer conical surface (12) and an inner conical surface (13), wherein the inner conical surface forms a hollow cone or cone tapering towards the tip area and from a material substantially not penetrated by light, wherein the first and the second light guide lateral surfaces (11) respectively expand from the tip area (6) towards the base area (5) at an angle of 90-150°, **characterized in that** the input-coupling devices (e) assigned to the first coupling points (7) deviate in their magnitude from the first and/or second light guide lateral surface (11) by less than 30% and that the second coupling point (8) includes a seat (18) for an end portion (EA) of the output light guide (LA) into which the said end portion is fitted in such a manner that light emerging from the second coupling point is coupled-in predominantly via the end portion of the output light guide, wherein said seat (18) is bounded by an inner surface (21) of the collector which is disposed approximately vertically to at least one or both of the light guide lateral surfaces (11) of the optical body.

2. Collector according to claim 1, **characterized in that** the seat (18) tapers towards the interior of the collector and/or the end portion (EA) of the output light guide (LA) tapers towards its end.

3. Collector according to one of the claims 1 to 2, **characterized in that** the first coupling points (7) each present a longitudinal central axis (I) and that the longitudinal central axis of the first coupling points intersects the output cross sectional surface (10) of the second coupling point.

4. Collector according to one of the claims 1 to 3, **characterized in that** the output cross sectional surface (10) of the collector is greater than or equal to an average input cross sectional surface (9) of the first coupling points.

5. Collector according to one of the claims 1 to 4, **characterized in that** the second coupling point (8) presents an output light coupling surface (26) that is arranged in such a manner that the light coupling out falls vertically or at an angle of 60 - 120°on that surface.

6. Collector according to one of the claims 1 to 5, **characterized in that** the inner and/or outer conical surfaces (13, 12) respectively include a cone tip angle of approximately 90-150°.

7. Collector according to one of the claims 1 to 6, **characterized in that** the first coupling points (7) are each formed as appendices (16) of the collector that respectively protrude outwardly.

8. Collector according to one of the claims 1 to 7, **characterized in that** the optical body (4) is integrally formed with the first and/or second coupling points (7, 8).

9. Collector according to one of the claims 1 to 8, **characterized in that** the first coupling points (7) each present an input light-coupling direction (e) that runs at least approximately parallel to the outer conical surface (12).

10. Collector according to one of the claims 1 to 9, **characterized in that** said two light guide lateral surfaces (11), between which the light-guiding region of the collector is defined, respectively taper or converge in the base area (5) towards the tip area (6).

11. Collector according to one of the claims 1 to 10, **characterized in that** light guide lateral surfaces (11) define a wall having a wall thickness and that the optical input cross section (9) of the first coupling points at least almost extends over the entire wall thickness.

12. Collector according to one of the claims 1 to 11, **characterized in that** the second coupling point (8) is constructed in such a manner or is provided with means such that this coupling point or these means reduce or minimize the entry of scattered light from an output light guide (LA) coupling to the second coupling point back into the optical collector (1), compared to an optically continuous light guide path made of the light wave guide material of the optical body (4).

13. Device with a least one photo-optical apparatus, **characterized in that** the device includes at least one collector (1) according to one of the claims 1 to 12, wherein the device includes a device (V1) disposed upstream of the collector (1) and having the input light guides (LE) and comprising light producing and/or light collecting apparatus for feeding the light into the input light guide (LE), and/or includes a device (V2) disposed downstream of the collector (1) and having the output light guide (LA) for further processing or using the light.

14. Device according to claim 13, **characterized in that** the device (V2) disposed downstream of the collector (1) and having the output light guide (LA) is a
lighting device, an energy conversion device or a device of transmitting a light-optical signal.

## Revendications

1. Collecteur optique (1), comprenant une entrée optique (2) pour coupler de la lumière provenant de plusieurs fibres optiques d'entrée dans le collecteur, et comprenant une sortie optique (3) pour extraire de la lumière depuis le collecteur et dans une fibre optique de sortie (LA), ledit collecteur comprenant un corps optique (4) avec une partie de base (5) dans laquelle est disposée l'entrée optique avec au moins deux points de couplage (7), et avec une partie de pointe (6) dans laquelle est disposée la sortie optique avec un deuxième point de couplage (8), les premiers points de couplage respectivement présentant une surface de section transversale optique d'entrée (9) et le deuxième point de couplage présentant une surface de section transversale de sortie (10), et la surface de section transversale de sortie étant inférieure à la somme de toutes les surfaces de section transversale d'entrée, le corps optique en outre étant délimité par deux surfaces latérales de la fibre optique (11), surfaces latérales qui s'étendent de la partie de base (5) vers la partie de pointe et qui s'étendent à une distance approximativement constante l'une par rapport à l'autre ou s'élargissent vers la partie de pointe, et les premiers points de couplage (7) étant arrangés de telle manière que ceux-ci couplent de la lumière entre les surfaces latérales des fibres optiques dans une direction de couplage d'entrée (e), le cors optique (4) étant conçu de façon conique et présentant une surface latérale de cône extérieure (12), et le corps optique étant délimité par deux surfaces latérales (11) de la fibre optique réalisées comme surfaces latérales de cône, c'est-à-dire la surface latérale de cône extérieure (12) et une surface latérale de cône intérieure (13), la surface latérale de cône intérieure formant un cône creux ou un cône en un matériau sensiblement pas traversée de lumière, cône qui se rétrécisse vers la partie de pointe, la première et la deuxième surface latérale (11) de la fibre optique s'élargissant respectivement de la partie de base (5) vers la partie de pointe (6) selon un angle de 90-150°,
**caractérisé en ce que** les directions de couplage (e) assignées aux premiers points de couplage (7) s'écartent dans leur montant de la première et/ou deuxième surface latérale (11) de la fibre optique de moins de 30° et que le deuxième point de couplage (8) présente un logement (18) pour une partie terminale (EA) de la fibre optique de sortie (LA), dans lequel logement la partie terminale est ajustée de telle manière que de lumière sortant du deuxième point de couplage est couplée dans la fibre optique de sortie principalement par la partie terminale, ledit logement (18) étant délimité par une surface intérieure (21) du collecteur disposée au moins à peu près perpendiculairement à l'une au moins ou les deux surfaces latérales (11) de la fibre optique du corps optique.

2. Collecteur selon la revendication 1, **caractérisé en ce que** le logement (18) se rétrécisse vers l'intérieur du collecteur et/ou la partie terminale (EA) de la fibre optique de sortie (LA) se rétrécisse vers son extrémité.

3. Collecteur selon l'une des revendications 1 à 2, **caractérisé en ce que** les premiers points de couplage (7) respectivement présentent un axe médian longitudinal (1) et que l'axe médian longitudinal des premiers points de couplage coupe la surface de section transversale de sortie (10) du deuxième point de couplage.

4. Collecteur selon l'une des revendications 1 à 3, **caractérisé en ce que** la surface de section transversale de sortie (10) du collecteur est supérieure ou égale à une surface de section transversale d'entrée moyenne (9) des premiers points de couplage.

5. Collecteur selon l'une des revendications 1 à 4, **caractérisé en ce que** le deuxième point de couplage (8) présente une surface de couplage de sortie de la lumière (26) disposée d'une telle manière que la lumière couplant en sortie tombe sur ladite surface de couplage de sortie de la lumière selon un angle de 60 - 120°.

6. Collecteur selon l'une des revendications 1 à 5, **caractérisé en ce que** la surface latérale de cône intérieure et/ou extérieure (13, 12) respectivement forment un angle au sommet du cône compris entre environ 90-150°.

7. Collecteur selon l'une des revendications 1 à 6, **caractérisé en ce que** les premiers points de couplage (7) sont respectivement formés comme appendices (16) du collecteur faisant saillie vers l'extérieur.

8. Collecteur selon l'une des revendications 1 à 7, **caractérisé en ce que** le corps optique (4) est formé en une pièce avec les premiers et/ou deuxièmes points de couplage (7, 8).

9. Collecteur selon l'une des revendications 1 à 8, **caractérisé en ce que** les premiers point de couplage (7) respectivement présente une direction de couplage de la lumière d'entrée (e) qui s'étend au moins à peu près parallèlement à la surface latérale de cône extérieure (12).

10. Collecteur selon l'une des revendications 1 à 5, **caractérisé en ce que** les deux surfaces latérales (11) de la fibre optique, entre lesquelles est délimitée la partie photoconductrice du collecteur, respectivement se rétrécissent ou convergent dans la région de base vers la partie de pointe (6).

11. Collecteur selon l'une des revendications 1 à 10, **caractérisé en ce que** les surfaces latérales (11) de la fibre optique délimitent une paroi d'une épaisseur et que la section transversale optique d'entrée (9) des premiers points de couplage s'étend sur presque toute l'épaisseur de paroi.

12. Collecteur selon l'une des revendications 1 à 11, **caractérisé en ce que** le deuxième point de couplage (8) est formé de telle manière ou est muni de tels moyens que le deuxième point de couplage ou ces moyens réduisent ou minimisent une entrée de la lumière rétrodiffusée depuis une fibre optique de sortie (LA) se couplant au deuxième point de couplage retour au collecteur optique (1) par rapport à un chemin de conduction de la lumière optiquement continu à partir du matériau conduisant des ondes lumineuses du corps optique (4).

13. Équipement avec au moins un appareil optique, **caractérisé en ce que** ledit équipement comporte au moins un collecteur (1) selon l'une des revendications 1 à 12, l'équipement comprenant un dispositif (V1) monté en amont du collecteur et muni des fibres optiques d'entrée (LE) et le dispositif comprenant des appareils produisent et/ou collectent de la lumière pour alimenter les fibres optiques d'entrée (LE) en lumière, et/ou comprenant un dispositif (V2) monté en aval du collecteur et muni de la fibre optique de sortie (LA) pour le traitement ultérieur de la lumière ou pour l'utilisation de la lumière.

14. Équipement selon la revendication 13, **caractérisé en ce que** le dispositif (V2) monté en aval du collecteur et muni de la fibre optique de sortie (LA) est un dispositif d'éclairage, un dispositif de transformation énergétique ou un dispositif de transmission d'un signal photo-optique.
